# EUROPEAN PATENT APPLICATION

(11) **EP 4 554 166 A1**
(43) Date of publication of application: **14.05.2025**
(21) Application number: 23834849.4
(22) Date of filing: 04.07.2023
(51) Int. Cl.: H04L 41/0894

(54) **UE POLICY ASSOCIATION PROCESSING METHOD AND APPARATUS, AND COMMUNICATION DEVICE**

(30) Priority: 08.07.2022 CN 202210806893; 09.01.2023 CN 202310029023
(71) Applicant: Vivo Mobile Communication Co., Ltd., Dongguan, Guangdong 523863 (CN)
(72) Inventor: LV, Huazhang, Dongguan, Guangdong 523863 (CN); ZHANG, Yizhong, Dongguan, Guangdong 523863 (CN); KE, Xiaowan, Dongguan, Guangdong 523863 (CN)
(74) Representative: Conti, Marco
(86) International application number: PCT/CN2023/105732
(87) International publication number: WO 2024/008082

(57) **Abstract**

This application discloses a method and an apparatus for processing a terminal policy association, and a communication device. The method for processing a terminal policy association includes: triggering, by a first communication device, a first operation after a terminal re-accesses a first network from a second network, where the first operation includes one of the following: activating and modifying a first terminal policy association, and releasing or deactivating a second terminal policy association; modifying the second terminal policy association; activating the first terminal policy association, and releasing or deactivating the second terminal policy association; creating a third terminal policy association, releasing the first terminal policy association, and releasing or deactivating the second terminal policy association; and creating a third terminal policy association, and releasing or deactivating the second terminal policy association; where the first terminal policy association and the third terminal policy association are used for obtaining terminal policy information by the terminal in the first network; the second terminal policy association is used for obtaining terminal policy information by the terminal in the second network; and the first communication device is located in the first network.

## Description

### CROSS-REFERENCE TO RELATED APPLICATIONS

This application claims priority to Chinese Patent Application No. 202210806893.3 filed in China on July 8, 2022, and claims priority to Chinese Patent Application No. 202310029023.4, filed in China on January 9, 2023, which are incorporated herein by reference in their entirety.

### TECHNICAL FIELD

This application pertains to the field of wireless communications technologies, and specifically relates to a method and an apparatus for processing a terminal policy association, and a communication device.

### BACKGROUND

A terminal policy association (UE policy association) is an association triggered by an access and mobility management function (Access and Mobility Management Function, AMF), so as to provide terminal policy information (UE policy, such as UE route selection policy (UE Route Selection Policy, URSP) rules) to a terminal. Each terminal policy association has an association ID (UE policy association ID). For each user equipment (User Equipment, UE, also referred to as terminal), an access and mobility management policy control function (Access and Mobility Management Policy Control Function, AM-PCF) provides terminal policy information, and the AM-PCF is responsible for generating the association identifier and terminal policy.

If the terminal returns from the 4th generation mobile communication technology (4th Generation Mobile Communication Technology, 4G) to the 5th generation mobile communication technology (5th Generation Mobile Communication Technology, 5G), the terminal needs to perform terminal registration again under 5G. The registration process also involves terminal policy association establishment (establishment), and the process of terminal policy association establishment is accompanied by AMF and AM-PCF selection. If the UE chooses a different AM-PCF and establishes a new terminal policy association after returning to 5G, and an old terminal policy association under 4G has not been released, there may be a problem that the terminal has two terminal policy associations. In addition, one terminal having two terminal policy associations to provide terminal policy information is not supported at present.

### SUMMARY

Embodiments of this application provide a method and an apparatus for processing a terminal policy association, and a communication device, which can resolve the problem of how to process terminal policy associations for a terminal handing over between two networks.

According to a first aspect, a method for processing a terminal policy association is provided, including:
triggering, by a first communication device, a first operation after a terminal re-accesses a first network from a second network, where the first operation includes one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; where
the first terminal policy association and the third terminal policy association are used for obtaining terminal policy information by the terminal in the first network;
the second terminal policy association is used for obtaining terminal policy information by the terminal in the second network;
the first communication device is located in the first network; and
the first network and the second network use different radio access technologies.

According to a second aspect, a method for processing a terminal policy association is provided, including:
triggering, by a first communication device, a second operation after a terminal accesses a second network from a first network, where the second operation includes one of the following:
releasing or deactivating a first terminal policy association;
retaining terminal policy information;
establishing a second terminal policy association; and
modifying the first terminal policy association; where
the first terminal policy association is used for obtaining terminal policy information by the terminal in the first network;
the second terminal policy association is used for obtaining terminal policy information by the terminal in the second network;
the first communication device is located in the first network; and
the first network and the second network use different radio access technologies.

According to a third aspect, a method for processing a terminal policy association is provided, including:
triggering, by a second communication device, a third operation after a terminal re-accesses a first network from a second network, where the third operation includes one of the following:
releasing a first terminal policy association; and
releasing or deactivating a second terminal policy association; where
the first terminal policy association is used for obtaining terminal policy information by the terminal in the first network;
the second terminal policy association is used for obtaining terminal policy information by the terminal in the second network;
the second communication device is located in the second network; and
the first network and the second network use different radio access technologies.

According to a fourth aspect, a method for processing a terminal policy association is provided, including:
sending, by a second communication device, an update location request to a fourth communication device after a terminal accesses a second network from a first network, where the update location request carries first indication information, and the first indication information is used to indicate one of the following:
not sending a deregistration notification to an old first communication device; and
sending a deregistration notification to the old first communication device, where the deregistration notification is used for indicating at least one of the following: retaining or releasing or deactivating a first terminal policy association, and retaining terminal policy information; where
the first terminal policy association is used for obtaining terminal policy information by the terminal in the first network;
the second communication device is located in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

According to a fifth aspect, a method for processing a terminal policy association is provided, including:
performing, by a third communication device, a first operation after a terminal re-accesses a first network from a second network, where the first operation includes one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; where
the first terminal policy association and the third terminal policy association are used for obtaining terminal policy information by the terminal in the first network;
the second terminal policy association is used for obtaining terminal policy information by the terminal in the second network;
the third communication device is located in the first network; and
the first network and the second network use different radio access technologies.

According to a sixth aspect, a method for processing a terminal policy association is provided, including:
performing, by a third communication device, a second operation after a terminal accesses a second network from a first network, where the second operation includes one of the following:
releasing or deactivating a first terminal policy association;
retaining terminal policy information;
establishing a second terminal policy association; and
modifying the first terminal policy association; where
the first terminal policy association is used for obtaining terminal policy information by the terminal in the first network;
the second terminal policy association is used for obtaining terminal policy information by the terminal in the second network;
the third communication device is located in the first network; and
the first network and the second network use different radio access technologies.

According to a seventh aspect, a method for processing a terminal policy association is provided, including:
sending, by a fourth communication device, trigger information after a terminal re-accesses a first network from a second network, where the trigger information is used to trigger an old first communication device to trigger at least one of the following: releasing a first terminal policy association; and releasing or deactivating a second terminal policy association; where
the first terminal policy association is used for obtaining terminal policy information by the terminal in the first network;
the second terminal policy association is used for obtaining terminal policy information by the terminal in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

According to an eighth aspect, a method for processing a terminal policy association is provided, including:
receiving, by a fourth communication device, an update location request sent by a second communication device after a terminal accesses a second network from a first network, where the update location request carries first indication information, and the first indication information is used to indicate one of the following:
not sending a deregistration notification to an old first communication device; and
sending a deregistration notification to the old first communication device, where the deregistration notification is used for indicating the old first communication device to trigger at least one of the following: retaining or releasing or deactivating a first terminal policy association, and retaining terminal policy information; where
the first terminal policy association is used for obtaining terminal policy information by the terminal in the first network;
the second communication device is located in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

According to a ninth aspect, an apparatus for processing a terminal policy association is provided, including:
a triggering module, configured to trigger a first operation after a terminal re-accesses a first network from a second network, where the first operation includes one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; where
the first terminal policy association and the third terminal policy association are used for obtaining terminal policy information by the terminal in the first network;
the second terminal policy association is used for obtaining terminal policy information by the terminal in the second network;
the first network and the second network use different radio access technologies.

According to a tenth aspect, an apparatus for processing a terminal policy association is provided, including:
a triggering module, configured to trigger a second operation after a terminal re-accesses a second network from a first network, where the second operation includes one of the following:
releasing or deactivating a first terminal policy association;
retaining terminal policy information;
establishing a second terminal policy association; and
modifying the first terminal policy association; where
the first terminal policy association is used for obtaining terminal policy information by the terminal in the first network;
the second terminal policy association is used for obtaining terminal policy information by the terminal in the second network;
the first network and the second network use different radio access technologies.

According to an eleventh aspect, an apparatus for processing a terminal policy association is provided, including:
a notification module, configured to trigger a third operation after a terminal re-accesses a first network from a second network, where the third operation includes at least one of the following:
releasing a first terminal policy association; and
releasing or deactivating a second terminal policy association; where
the first terminal policy association is used for obtaining terminal policy information by the terminal in the first network;
the second terminal policy association is used for obtaining terminal policy information by the terminal in the second network; and
the first network and the second network use different radio access technologies.

According to a twelfth aspect, an apparatus for processing a terminal policy association is provided, including:
a first sending module, configured to send an update location request to a fourth communication device after a terminal accesses a second network from a first network, where the update location request carries first indication information, and the first indication information is used to indicate one of the following:
not sending a deregistration notification to an old first communication device; and
sending a deregistration notification to the old first communication device, where the deregistration notification is used for indicating at least one of the following: retaining or releasing or deactivating a first terminal policy association, and retaining terminal policy information; where
the first terminal policy association is used for obtaining terminal policy information by the terminal in the first network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

According to a thirteenth aspect, an apparatus for processing a terminal policy association is provided, including:
an execution module, configured to perform a first operation after a terminal re-accesses a first network from a second network, where the first operation includes one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; where
the first terminal policy association and the third terminal policy association are used for obtaining terminal policy information by the terminal in the first network;
the second terminal policy association is used for obtaining terminal policy information by the terminal in the second network; and
the first network and the second network use different radio access technologies.

According to a fourteenth aspect, an apparatus for processing a terminal policy association is provided, including:
an execution module, configured to perform a second operation after a terminal re-accesses a second network from a first network, where the second operation includes one of the following:
releasing or deactivating a first terminal policy association;
retaining terminal policy information;
establishing a second terminal policy association; and
modifying the first terminal policy association; where
the first terminal policy association is used for obtaining terminal policy information by the terminal in the first network;
the second terminal policy association is used for obtaining terminal policy information by the terminal in the second network; and
the first network and the second network use different radio access technologies.

According to a fifteenth aspect, an apparatus for processing a terminal policy association is provided, including:
a first sending module, configured to send trigger information after a terminal re-accesses a first network from a second network, where the trigger information is used to trigger an old first communication device to trigger at least one of the following: releasing a first terminal policy association; and releasing or deactivating a second terminal policy association; where
the first terminal policy association is used for obtaining terminal policy information by the terminal in the first network;
the second terminal policy association is used for obtaining terminal policy information by the terminal in the second network;
the old first communication device is a communication device that maintains a terminal policy association for the terminal in the first network before the terminal accesses the second network; and
the first network and the second network use different radio access technologies.

According to a sixteenth aspect, an apparatus for processing a terminal policy association is provided, including:
a receiving module, configured to receive an update location request sent by a second communication device, after a terminal accesses a second network from a first network, where the update location request carries first indication information, and the first indication information is used to indicate one of the following:
not sending a deregistration notification to an old first communication device; and
sending a deregistration notification to the old first communication device, where the deregistration notification is used for indicating the old first communication device to trigger at least one of the following: retaining or releasing or deactivating a first terminal policy association, and retaining terminal policy information; where
the first terminal policy association is used for obtaining terminal policy information by the terminal in the first network;
the second communication device is located in the second network;
the old first communication device is a communication device that maintains a terminal policy association for the terminal in the first network before the terminal accesses the second network; and
the first network and the second network use different radio access technologies.

According to a seventeenth aspect, a communication device is provided, including a processor and a memory, where the memory stores a program or instructions capable of running on the processor, and when the program or the instructions are executed by the processor, the steps of the method according to the first aspect, the second aspect, the third aspect, the fourth aspect, the fifth aspect, the sixth aspect, the seventh aspect, or the eighth aspect are implemented.

According to an eighteenth aspect, a communication device is provided, including a processor and a communication interface, where the processor is configured to trigger a first operation after a terminal re-accesses a first network from a second network, where the first operation includes one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; where
the first terminal policy association and the third terminal policy association are used for obtaining terminal policy information by the terminal in the first network;
the second terminal policy association is used for obtaining terminal policy information by the terminal in the second network;
the first communication device is located in the first network; and
the first network and the second network use different radio access technologies.

According to a nineteenth aspect, a communication device is provided, including a processor and a communication interface, where the processor is configured to trigger a second operation after a terminal re-accesses a second network from a first network, where the second operation includes one of the following:
releasing or deactivating a first terminal policy association;
retaining terminal policy information;
establishing a second terminal policy association; and
modifying the first terminal policy association; where
the first terminal policy association is used for obtaining terminal policy information by the terminal in the first network;
the second terminal policy association is used for obtaining terminal policy information by the terminal in the second network;
the first communication device is located in the first network; and
the first network and the second network use different radio access technologies.

According to a twentieth aspect, a communication device is provided, including a processor and a communication interface, where the communication interface is configured to trigger a third operation after a terminal re-accesses a first network from a second network, where the third operation includes one of the following:
releasing a first terminal policy association; and
releasing or deactivating a second terminal policy association; where
the first terminal policy association is used for obtaining terminal policy information by the terminal in the first network;
the second terminal policy association is used for obtaining terminal policy information by the terminal in the second network;
the second communication device is located in the second network; and
the first network and the second network use different radio access technologies.

According to a twenty-first aspect, a communication device is provided, including a processor and a communication interface, where the communication interface is configured to send an update location request to a fourth communication device after a terminal accesses a second network from a first network, where the update location request carries first indication information, and the first indication information is used to indicate one of the following:
not sending a deregistration notification to an old first communication device; and
sending a deregistration notification to the old first communication device, where the deregistration notification is used for indicating at least one of the following: retaining or releasing or deactivating a first terminal policy association, and retaining terminal policy information; where
the first terminal policy association is used for obtaining terminal policy information by the terminal in the first network;
the second communication device is located in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

According to a twenty-second aspect, a communication device is provided, including a processor and a communication interface, where the processor is configured to perform a first operation after a terminal re-accesses a first network from a second network, where the first operation includes one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; where
the first terminal policy association and the third terminal policy association are used for obtaining terminal policy information by the terminal in the first network;
the second terminal policy association is used for obtaining terminal policy information by the terminal in the second network;
the third communication device is located in the first network; and
the first network and the second network use different radio access technologies.

According to a twenty-third aspect, a communication device is provided, including a processor and a communication interface, where the processor is configured to perform a second operation after a terminal accesses a second network from a first network, where the second operation includes at least one of the following:
releasing or deactivating a first terminal policy association;
retaining terminal policy information;
establishing a second terminal policy association; and
modifying the first terminal policy association; where
the first terminal policy association is used for obtaining terminal policy information by the terminal in the first network;
the second terminal policy association is used for obtaining terminal policy information by the terminal in the second network;
the third communication device is located in the first network; and
the first network and the second network use different radio access technologies.

According to a twenty-fourth aspect, a communication device is provided, including a processor and a communication interface, where the communication interface is configured to send trigger information after a terminal re-accesses a first network from a second network, where the trigger information is used to trigger an old first communication device to trigger at least one of the following: releasing a first terminal policy association; and releasing or deactivating a second terminal policy association; where
the first terminal policy association is used for obtaining terminal policy information by the terminal in the first network;
the second terminal policy association is used for obtaining terminal policy information by the terminal in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

According to a twenty-fifth aspect, a communication device is provided, including a processor and a communication interface, where the communication interface is configured to receive an update location request sent by a second communication device after a terminal accesses a second network from a first network, where the update location request carries first indication information, and the first indication information is used to indicate one of the following:
not sending a deregistration notification to an old first communication device; and
sending a deregistration notification to the old first communication device, where the deregistration notification is used for indicating the old first communication device to trigger at least one of the following: retaining or releasing or deactivating a first terminal policy association, and retaining terminal policy information; where
the first terminal policy association is used for obtaining terminal policy information by the terminal in the first network;
the second communication device is located in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

According to a twenty-sixth aspect, a communication system is provided, including a first communication device, a second communication device, a third communication device, and a fourth communication device, where the first communication device may be configured to perform the steps of the method for processing a terminal policy association according to the first or second aspect, the second communication device may be configured to perform the steps of the method for processing a terminal policy association according to the third or fourth aspect, the third communication device may be configured to perform the steps of the method for processing a terminal policy association according to the fifth or sixth aspect; and the fourth communication device may be configured to perform the steps of the method for processing a terminal policy association according to the seventh or eighth aspect.

According to a twenty-seventh aspect, a readable storage medium is provided, where a program or instructions are stored in the readable storage medium, and when the program or the instructions are executed by a processor, the steps of the method for processing a terminal policy association according to the first aspect, the second aspect, the third aspect, the fourth aspect, the fifth aspect, the sixth aspect, the seventh aspect or the eighth aspect are implemented.

According to a twenty-eighth aspect, a chip is provided, where the chip includes a processor and a communication interface, the communication interface is coupled to the processor, and the processor is configured to run a program or instructions to implement the method for processing a terminal policy association according to the first aspect, the second aspect, the third aspect, the fourth aspect, the fifth aspect, the sixth aspect, the seventh aspect, or the eighth aspect.

According to a twenty-ninth aspect, a computer program/program product is provided, where the computer program/program product is stored in a storage medium, and the computer program/program product is executed by at least one processor to implement the method for processing a terminal policy association according to the first aspect, the second aspect, the third aspect, the fourth aspect, the fifth aspect, the sixth aspect, the seventh aspect, or the eighth aspect.

The embodiments of this application provide the method for processing a terminal policy association for the terminal accessing the second network from the first network, or for the terminal re-accessing the first network from the second network, so that the terminal can still obtain terminal policy information based on the terminal policy association provided by the network side after accessing the second network from the first network or re-accessing the first network from the second network.

### BRIEF DESCRIPTION OF DRAWINGS

FIG. 1 is a block diagram of a wireless communication system to which embodiments of this application may be applied;
FIG. 2 is a first schematic diagram of a method for processing a terminal policy association according to an embodiment of this application;
FIG. 3 is a schematic diagram of a method for processing a terminal policy association when an AMF and an AM-PCF remain unchanged after a terminal accesses a 5G network from a 4G network according to an embodiment of this application;
FIG. 4 is a schematic diagram of a method for processing a terminal policy association when an AMF remains unchanged and an AM-PCF is changed after a terminal accesses a 5G network from a 4G network according to an embodiment of this application;
FIG. 5 is a schematic diagram of a method for processing a terminal policy association when an AMF is changed and an AM-PCF remains unchanged after a terminal accesses a 5G network from a 4G network according to an embodiment of this application;
FIG. 6 is a schematic diagram of a method for processing a terminal policy association when an AMF is changed and an AM-PCF is changed after a terminal accesses a 5G network from a 4G network according to an embodiment of this application;
FIG. 7 is a second schematic diagram of a method for processing a terminal policy association according to an embodiment of this application;
FIG. 8 is a third schematic diagram of a method for processing a terminal policy association according to an embodiment of this application;
FIG. 9 is a fourth schematic diagram of a method for processing a terminal policy association according to an embodiment of this application;
FIG. 10 is a fifth schematic diagram of a method for processing a terminal policy association according to an embodiment of this application;
FIG. 11 is a sixth schematic diagram of a method for processing a terminal policy association according to an embodiment of this application;
FIG. 12 is a seventh schematic diagram of a method for processing a terminal policy association according to an embodiment of this application;
FIG. 13 is an eighth schematic diagram of a method for processing a terminal policy association according to an embodiment of this application;
FIG. 14 is a schematic diagram of a method for processing a terminal policy association according to embodiment 1 of this application;
FIG. 15 is a schematic diagram of a method for processing a terminal policy association according to embodiment 1 of this application;
FIG. 16 is a schematic diagram of a method for processing a terminal policy association according to embodiment 2 of this application;
FIG. 17 is a first schematic diagram of a method for processing a terminal policy association according to embodiment 2 of this application;
FIG. 18 is a second schematic diagram of a method for processing a terminal policy association according to embodiment 2 of this application;
FIG. 19 is a third schematic diagram of a method for processing a terminal policy association according to embodiment 2 of this application;
FIG. 20 is a fourth schematic diagram of a method for processing a terminal policy association according to embodiment 2 of this application;
FIG. 21 is a fifth schematic diagram of a method for processing a terminal policy association according to embodiment 2 of this application;
FIG. 22 is a sixth schematic diagram of a method for processing a terminal policy association according to embodiment 2 of this application;
FIG. 23 is a seventh schematic diagram of a method for processing a terminal policy association according to embodiment 2 of this application;
FIG. 24 is an eighth schematic diagram of a method for processing a terminal policy association according to embodiment 2 of this application;
FIG. 25 is a ninth schematic diagram of a method for processing a terminal policy association according to embodiment 2 of this application;
FIG. 26 is a tenth schematic diagram of a method for processing a terminal policy association according to embodiment 2 of this application;
FIG. 27 is an eleventh schematic diagram of a method for processing a terminal policy association according to embodiment 2 of this application;
FIG. 28A is a twelfth schematic diagram of a method for processing a terminal policy association according to embodiment 2 of this application;
FIG. 28B is a thirteenth schematic diagram of a method for processing a terminal policy association according to embodiment 2 of this application;
FIG. 29 is a schematic diagram of a method for processing a terminal policy association according to embodiment 3 of this application;
FIG. 30 is a first schematic diagram of a method for processing a terminal policy association according to embodiment 3 of this application;
FIG. 31 is a second schematic diagram of a method for processing a terminal policy association according to embodiment 3 of this application;
FIG. 32 is a third schematic diagram of a method for processing a terminal policy association according to embodiment 3 of this application;
FIG. 33 is a fourth schematic diagram of a method for processing a terminal policy association according to embodiment 3 of this application;
FIG. 34 is a schematic diagram of a method for processing a terminal policy association according to embodiment 4 of this application;
FIG. 35 is a first schematic diagram of an apparatus for processing a terminal policy association according to an embodiment of this application;
FIG. 36 is a second schematic diagram of an apparatus for processing a terminal policy association according to an embodiment of this application;
FIG. 37 is a third schematic diagram of an apparatus for processing a terminal policy association according to an embodiment of this application;
FIG. 38 is a fourth schematic diagram of an apparatus for processing a terminal policy association according to an embodiment of this application;
FIG. 39 is a fifth schematic diagram of an apparatus for processing a terminal policy association according to an embodiment of this application;
FIG. 40 is a sixth schematic diagram of an apparatus for processing a terminal policy association according to an embodiment of this application;
FIG. 41 is a seventh schematic diagram of an apparatus for processing a terminal policy association according to an embodiment of this application;
FIG. 42 is an eighth schematic diagram of an apparatus for processing a terminal policy association according to an embodiment of this application;
FIG. 43 is a first schematic structural diagram of a communication device according to an embodiment of this application; and
FIG. 44 is a second schematic structural diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application may be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE)/LTE-advanced (LTE-Advanced, LTE-A) system, and may alternatively be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for an illustration purpose, and NR terms are used in most of the following descriptions, although these technologies may alternatively be applied to other applications than an NR system application, such as the 6th generation (6^{th} Generation, 6G) communication system.

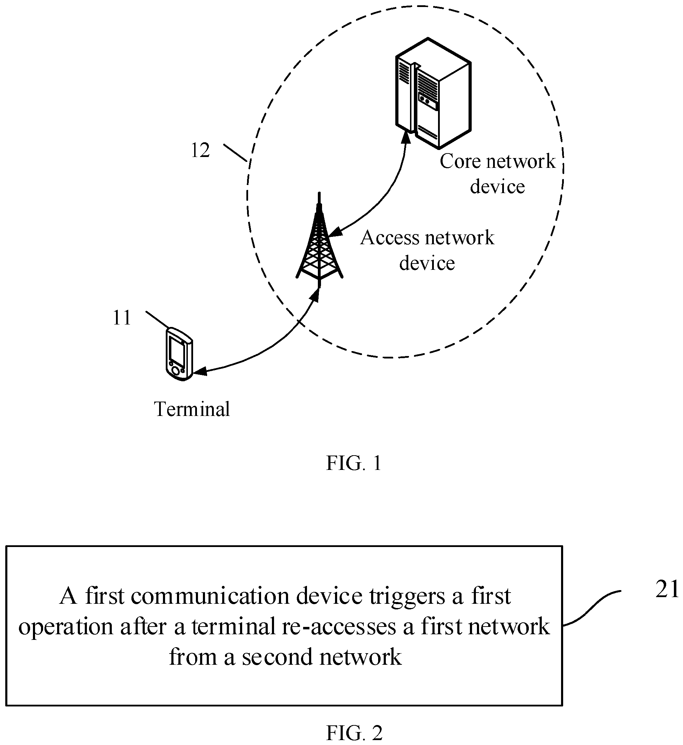

FIG. 1 is a block diagram of a wireless communication system applicable to an embodiment of this application. The wireless communication system includes a terminal 11 and a network-side device 12. The terminal 11 may be a mobile phone, a tablet computer (Tablet Personal Computer), a laptop computer (Laptop Computer), a personal digital assistant (personal digital assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include a network-side device or a core network device, where the network-side device may also be referred to as a radio network-side device, a radio access network (Radio Access Network, RAN), a radio access network function, or a radio access network unit. The access network device may include a base station, a wireless local area network (Wireless Local Area Network, WLAN) access point, a wireless fidelity Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

The following first describes the related technical points involved in the embodiments of this application.
1. UE Route Selection Policy (UE Route Selection Policy, URSP) rules (rules).

URSP rules are a terminal policy defined by the 3rd generation partnership project (3GPP, 3rd Generation Partnership Project). According to the URSP rules, UE may match traffic of an application (Application, APP) to a specific protocol data unit (Protocol Data Unit, PDU) session (session).

For example, when the application on the UE has traffic to send to a server, the APP may send traffic characteristics of the APP to the UE, where the traffic characteristics, for example, include a destination Internet Protocol (Internet Protocol, IP) address, a fully qualified domain name (Fully Qualified Domain Name, FQDN), and so on. The UE performs matching on the URSP rules in the UE one by one based on the traffic characteristics of the APP.

In the URSP rules, specified traffic characteristics or traffic descriptions include the following content:

**Table 1**

| | |
|---|---|
| Traffic descriptor (Traffic descriptor) | This section defines traffic descriptor components of the URSP rules. |
| APP descriptors (Application descriptors) | Mainly includes OSID and OSAPPID. |
| IP descriptors (IP descriptors) | Destination Internet protocol (Internet Protocol, IP) triplet |
| Domain descriptors (Domain descriptors) | Mainly based on FQDN fully qualified domain name. |
| Non-IP descriptors (Non-IP descriptors) | Target information descriptors of non-IP traffic |
| Data network name (DNN) | Used to describe which data network traffic of the APP accesses or connects to. |
| Connection capabilities (Connection Capabilities) | This matches information provided in the application of the UE when requesting to connect to a network connection with a specific function. |
| | Similar to "ims", "mms", and "Internet" (IP Multimedia Subsystem, IP multimedia subsystem; Multimedia Messaging Service, multimedia messaging service, which is actually MMS). |

For example, the APP may send one IP descriptor (such as a destination IP triplet) to describe the traffic of the APP. For example, the traffic of the APP is a traffic to be sent to the destination IP of 10.1.1.1 and the port number of 80. Then, if such traffic descriptor (Traffic descriptor) is present in the URSP rules, it means that such traffic of the APP may be matched to a specific URSP rule.

After querying that the traffic of the APP has a URSP rule to be matched, the next step is to choose which PDU session to send the traffic (traffic) of the APP.

Generally, under a traffic descriptor (Traffic descriptor), there are multiple route selection descriptors (Route Selection Descriptor, RSD), and each RSD represents a set of attributes or PDU session parameters. For example, the traffic of APP matches a set of traffic descriptors with a destination IP of 10.1.1.1 and a port number of 80, and there are the following RSDs under this set of traffic descriptors:
1) RSD precedence = 1
   11) S-NSSAI-a
   12) Non-3GPP Access
2) RSD precedence = 2
   21) S-NSSAI-a
   22) 3GPP Access
   23) DNN = Internet
   24) SSC mode = 3

For example, the characteristics of PDU session corresponding to RSD1 are: S-NSSAI = S-NSSAI-a, and non-3GPP access.

### 2. Necessity for obtaining terminal policy information (such as URSP rules) under 4G by the terminal

Terminal policy information is a concept introduced in 5G, and is mainly used for establishing a PDU session to a specific data network name (Data Network Name, DNN) by the terminal.

However, the concept of terminal policy information is absent in 4G. At present, according to the terminal policy information and some mapping rules, the terminal can map some parameters into PDU sessions established by the terminal to a specific access point name (Access point name, APN) in 4G.

For example, after receiving the terminal policy information, the terminal can map or convert a DNN in the terminal policy information into an APN according to some mapping rules, and then establish a packet data network (Packet Data Networks, PDN) connection to the APN.

Therefore, the terminal also needs to obtain terminal policy information in 4G. However, at present, no such method is available to provide terminal policy information for terminals under 4G.

The following specifically describes the method and apparatus for processing a terminal policy association, and the communication device provided in the embodiments of this application through specific embodiments and application scenarios thereof with reference to the accompanying drawings.

Refer to FIG. 2. An embodiment of this application provides a method for processing a terminal policy association, which includes the following steps.

Step 21: A first communication device triggers a first operation after a terminal re-accesses a first network from a second network, where the first operation includes one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; where
the first terminal policy association and the third terminal policy association are used for obtaining terminal policy information by the terminal in the first network.

The third terminal policy association is a terminal policy association established by the first communication device (such as an AMF) after re-selection of an AM-PCF or UE-PCF for the terminal after the terminal accesses or hands over from the second network (such as 4G) to the first network (such as 5G network).

The first terminal policy association is a terminal policy association still retained by the terminal in the original first network (such as 5G) after the terminal accesses or hands over from the first network (such as 5G) to the second network (such as 4G network), and the policy association may be still retained and not released after the terminal accesses the second network (such as 4G network).

For releasing or deactivating the second terminal policy association, the releasing the second terminal policy association may alternatively be: terminating the second terminal policy association.

In this patent, the releasing a terminal policy association may alternatively be written as terminating the terminal policy association.

The triggering a first operation may alternatively be performing the first operation. In this patent, "trigger" can be understood as "perform".

In an implementation, the triggering the first operation by the first communication device occurs after the terminal re-accesses the first network from the second network, or it may alternatively be considered that the triggering the first operation by the first communication device occurs when the terminal re-accesses the first network from the second network.

Being after the terminal re-accesses the first network from the second network can be understood as:
the terminal accesses the first network for the first time, or
after being turned on, the terminal accesses the first network, and then hands over or accesses the second network due to services and other reasons, and then returns to or accesses the first network again from the second network.

The second terminal policy association is used for obtaining terminal policy information by the terminal in the second network;
the first communication device is located in the first network; and
the first network and the second network use different radio access technologies (Radio Access Technology, RAT).

According to this embodiment of the application, in the processing method in which the first communication device provides a terminal policy association for the terminal re-accessing the first network from the second network, the terminal can still obtain terminal policy information based on the terminal policy association provided by the network side after re-accessing the first network from the second network.

In this embodiment of this application, optionally, the first communication device may be, for example, an AMF. Certainly, it may alternatively be other communication devices.

In this embodiment of this application, optionally, the first network may be, for example, a 5G network, and the second network may be a 4G network. Certainly, it may alternatively be other networks.

In this embodiment of the present invention, modifying the second terminal policy association means modifying the second terminal policy association into a terminal policy association capable of providing terminal policy information for the terminal in the first network. For example, when the terminal is in the second network (4G), the second terminal policy association being established to an SM-PCF is modified to one established to an AM-PCF. When the terminal re-accesses the first network (5G network), if the AM-PCF is still serving the terminal and providing UE policies, in this case, the AMF may trigger a terminal policy association modification request (such as Npcf_UEPolicyControl_Update) to the AM-PCF for changing an associated user from the SM-PCF to the AMF. It indicates that the terminal still uses the second terminal policy association after accessing the first network from the second network, with the associated user being changed from the SM-PCF to the AMF. In this way, when the terminal policy information needs to be updated for the terminal in the first network, it is sent to the UE through the AMF, instead of the SM-PCF, by using a manner supported in the 4G network.

In this embodiment of the present invention, optionally, an execution order of the three actions of "creating a third terminal policy association, releasing the first terminal policy association, and releasing or deactivating the second terminal policy association" is not limited. For example, the third terminal policy association may be created first, then the first terminal policy association may be released, and the second terminal policy association may be released or deactivated. Certainly, the first terminal policy association may alternatively be released, the second terminal policy association is released or deactivated, and then the third terminal policy association is created. For example, if the terminal can have only one UE policy association, the second terminal policy association may only be released or deactivated first, and then the third terminal policy association may be newly established to the new AM-PCF. If one terminal is allowed to have multiple policy associations in multiple networks, the third terminal policy association may be established first, and then the second terminal policy association may be released or deactivated.

In this embodiment of the present invention, optionally, an execution order of the two actions of "creating a third terminal policy association and releasing or deactivating the second terminal policy association" is not limited. For example, the third terminal policy association may be created first and then the second terminal policy association may be released or deactivated, or certainly, the second terminal policy association may be released or deactivated first and then the third terminal policy association may be created.

In this embodiment of this application, optionally, the triggering the first operation includes: obtaining, by the first communication device, first information; and triggering, by the first communication device, the first operation based on the first information; where
the first information includes at least one of the following:
index information of an old first communication device;
index information of an old third communication device;
an identifier (ID) of the first terminal policy association; and
a terminal identifier, such as a subscription permanent identifier (Subscription Permanent Identifier, SUPI) or GPSI (General Public Subscription Identifier).

The old first communication device and the old third communication device are communication devices that maintain a terminal policy association for the terminal in the first network before the terminal accesses the second network.

Optionally, the index information of the old first communication device includes at least one of the following: a first communication device ID and a first communication device address; and/or, the index information of the old third communication device includes at least one of the following: a third communication device ID and a third communication device address. The address is, for example, an IP address, an FQDN, or a URL.

The first operation is mainly used for creating a terminal policy association to the AM-PCF; or releasing and deactivating a policy association to the old AM-PCF. However, the first communication device does not know an address of the AM-PCF that maintains a policy association in the network, and therefore requires the first information.

In some embodiments of this application, optionally, the obtaining the first information includes receiving first information sent by a second communication device; where the second communication device is located in the second network. The second communication device may be, for example, an MME. Certainly, it may alternatively be other communication devices. In this embodiment, it should be noted that a communication interface is present between the first communication device and the second communication device. When the first communication device is an AMF and the second communication device is an MME, the communication interface between them is N26 interface, and the N26 interface supports signaling exchange between the MME and the AMF. If the N26 interface is not supported, there is no interworking between the MME and the AMF. The second communication device (for example, the MME) may send the first information to the first communication device (the AMF) through the following signaling: a forward relocation request (forward relocation request), a context response (context response), and a context request (context request).

In some embodiments of this application, optionally, the obtaining the first information includes receiving first information sent by a fourth communication device, and the fourth communication device provides unified data management services for both the first network and the second network. The fourth communication device may be, for example, a UDM, or an HSS, or a communication device integrating the UDM and the HSS. Certainly, it may alternatively be other communication devices. In this embodiment, it should be noted that a communication interface may be or may not be present between the first communication device and the second communication device. For example, in the UDM+HSS, the first information may be stored as a UE context as shown in Table 2 below:

**Table 2**

| | | |
|---|---|---|
| Intersystem continuity context (Intersystem continuity Context) | AM-PCF ID, UE policy association ID | Indicates address information of the AM-PCF providing URSP rules and UE policy association ID, for terminals in 5G or 4G. |

Then, the UDM+HSS (denoted as the UDM, or the HSS, or the communication device integrating the UDM and the HSS) may send the first information to the AMF through the following signaling: Nudm_SubscriberDataManagement (SDM) Get response (that is, the AMF sends a Nudm_SDM_Get request to the UDM+HSS, and then the UDM+HSS sends it to the AMF.

In some embodiments of this application, optionally, the obtaining the first information includes receiving first information sent by an old first communication device, that is, transmitting the first information between two AMFs, for example, transmitting the first information through Namf_Communication_UEContextTransfer. The old first communication device retains a terminal context (context) and does not de-attach (de-attach) the terminal. The first information is included in the terminal context (for example, the first information is stored in the UE context in the UDM+HSS as described in Table 2 above). After the terminal returns to the first network from the second network, if the first communication device is changed, a new first communication device obtains the first information from the old first communication device, and the new first communication device can find the old first communication device based on a globally unique temporary identifier (Globally Unique Temporary Identifier, GUTI) of the terminal. If the first communication device remains unchanged, the first information may be directly learned.

In this embodiment of this application, the first information may be used for finding the old third communication device. It may be seen from the above embodiment that after the terminal re-accesses the first network from the second network, the old third communication device may be found in the following manners:
1) When a communication interface is present between the first communication device and the second communication device, the old first communication device may provide the first information to the second communication device after the terminal accesses the second network from the first network, and the second communication device may provide the first information to the new first communication device after the terminal re-accesses the first network from the second network.
2) If no communication interface is present between the first communication device and the second communication device, the old first communication device may store the first information into the fourth communication device after the terminal accesses the second network from the first network, and the second communication device may obtain the first information from the fourth communication device after the terminal re-accesses the first network from the second network.
3) The old first communication device retains a terminal context (context) and does not de-attach (de-attach) the terminal. In the terminal context, the first information is included. After the terminal returns to the first network from the second network, if the first communication device is changed, a new first communication device obtains the first information from the old first communication device, and the new first communication device can find the old first communication device based on a globally unique temporary identifier (Globally Unique Temporary Identifier, GUTI) of the terminal. If the first communication device remains unchanged, the first information may be directly learned.

In this embodiment of this application, optionally, the triggering the first operation includes at least one of the following:
(1) In a case of determining based on the first information that the first communication device remains unchanged and the third communication device remains unchanged after the terminal re-accesses the first network from the second network, the first communication device triggers the first operation, where the first operation includes one of the following:
   Modifying the second terminal policy association; that is, modifying the second terminal policy association into a policy association capable of providing terminal policy information in the first network. In this case, the third communication device maintains only one terminal policy association.

Activating the first terminal policy association, and releasing or deactivating the second terminal policy association. In this case, the third communication device maintains one or two terminal policy associations.

Creating a third terminal policy association, releasing the first terminal policy association, and releasing or deactivating the second terminal policy association. In this case, the third communication device maintains one or two terminal policy associations.

Creating a third terminal policy association, and releasing or deactivating the second terminal policy association. In this case, the third communication device maintains one or two terminal policy associations. In this case, the first terminal policy may possibly have been released when the terminal accesses the 4G network from the 5G network.

In this embodiment of this application, optionally, the in a case of determining based on the first information that the first communication device remains unchanged and the third communication device remains unchanged after the terminal re-accesses the first network from the second network, that the first communication device triggers the first operation includes: triggering the third communication device to perform one of the following:
modifying the second terminal policy association; that is, modifying the second terminal policy association into a policy association capable of providing terminal policy information in the first network;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association.

In this embodiment of this application, the third communication device may be, for example, an AM-PCF. Certainly, it may alternatively be other communication devices.

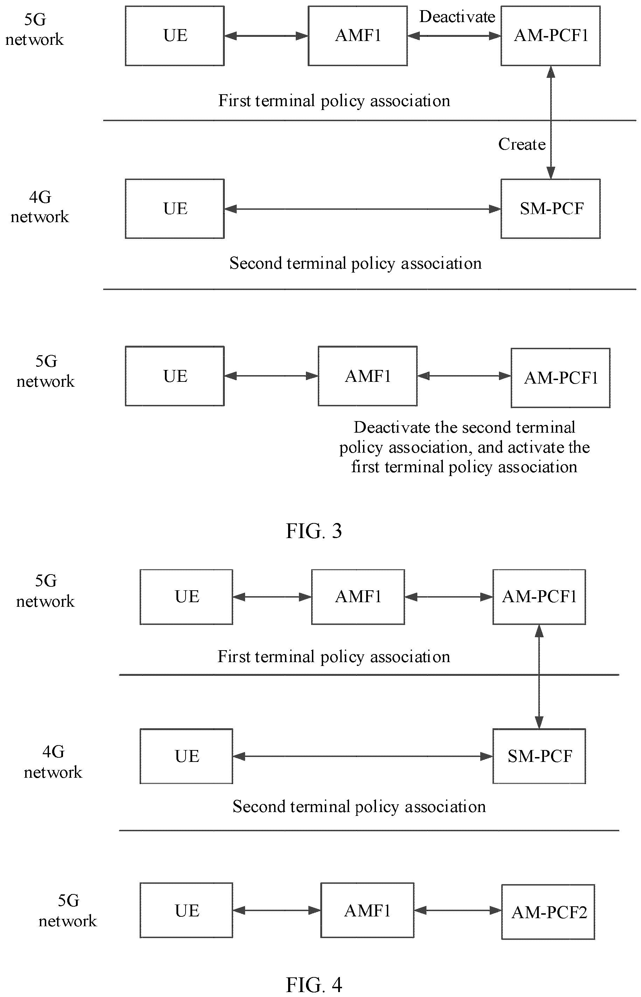

Refer to FIG. 3. FIG. 3 is a schematic diagram of a method for processing a terminal policy association when the AMF and the AM-PCF remain unchanged after the terminal re-accesses the 5G network from the 4G network. After the terminal accesses the 5G network from the 4G network, an AMF1 deactivates or releases the first terminal policy association and creates a second terminal policy association, and after the terminal re-accesses the 5G network from the 4G network, the AMF1 may trigger the AM-PCF1 to reactivate the first terminal policy association and deactivate or release the second terminal policy association. Here, deactivating an association means that the terminal policy association is retained for future use after re-access to the network, but the terminal policy association does not work and is not used to provide terminal policy information to the terminal. When the AM-PCF needs to update the terminal policy information for the UE, it does not send the terminal policy information through the deactivated terminal policy association. For example, the AM-PCF may set an association corresponding to a UE policy association ID as "disabled", that is, deactivated and not to be used.

(2) In a case of determining based on the first information that the first communication device remains unchanged and the third communication device is changed after the terminal re-accesses the first network from the second network, the first communication device triggers a first operation, where the first operation includes one of the following:
creating a third terminal policy association, releasing the first terminal policy association, and releasing or deactivating the second terminal policy association; and
creating a third terminal policy association, and releasing or deactivating the second terminal policy association.

Due to the change of the third communication device, a new terminal policy association may definitely be created. The old association, such as the first or second terminal policy association, may be released. The releasing a policy association may use the following signaling: Npcf_UEPolicyControl_Delete.

In this embodiment of this application, optionally, in a case of determining based on the first information that the first communication device remains unchanged and the third communication device is changed after the terminal re-accesses the first network from the second network, that the first communication device triggers the first operation includes one of the following:
triggering the old third communication device to release the first terminal policy association and release or deactivate the second terminal policy association; and triggering the newly selected third communication device to create a new third terminal policy association; and
triggering the old third communication device to release or deactivate the second terminal policy association; and triggering the newly selected third communication device to create a new third terminal policy association.

Refer to FIG. 4. FIG. 4 is a schematic diagram of a method for processing a terminal policy association when the AMF remains unchanged and the AM-PCF is changed after the terminal re-accesses the 5G network from the 4G network according to the embodiments of this application. The AMF 1 may trigger the AM-PCF 1 to release the first terminal policy association and release or deactivate the second terminal policy association, and trigger the AM-PCF2 to create a new third terminal policy association; or, trigger the AM-PCF 1 to release or deactivate the second terminal policy association (in this case, the first terminal policy may have been released when the terminal accesses the 4G network from the 5G network), and trigger the AM-PCF2 to create a new third terminal policy association.

(3) In a case of determining based on the first information that the first communication device is changed and the third communication device remains unchanged after the terminal re-accesses the first network from the second network, the first communication device triggers a first operation, where the first operation includes one of the following:
activating and modifying a first terminal policy association, and releasing or deactivating a second terminal policy association;
modifying the second terminal policy association;
creating a third terminal policy association, releasing the first terminal policy association, and releasing or deactivating the second terminal policy association; and
creating a third terminal policy association, and releasing or deactivating the second terminal policy association (in this case, the first terminal policy may possibly have been released when the terminal accesses the 4G network from the 5G network).

In this embodiment of this application, optionally, in a case of determining based on the first information that the first communication device is changed and the third communication device remains unchanged after the terminal re-accesses the first network from the second network, that the first communication device triggers the first operation includes one of the following:
triggering the third communication device to activate and modify the first terminal policy association, and release or deactivate the second terminal policy association;
triggering the third communication device to modify the second terminal policy association;
triggering the third communication device to release the first terminal policy association, creating a third terminal policy association, and releasing or deactivating the second terminal policy association;
indicating the old first communication device to trigger the third communication device to release the first terminal policy association; and triggering the third communication device to create a new third terminal policy association, and release or deactivate the second terminal policy association;
indicating the second communication device to inform the old first communication device to trigger the third communication device to release the first terminal policy association; and triggering the third communication device to create a new third terminal policy association, and release or deactivate the second terminal policy association;
triggering the third communication device to create a new third terminal policy association, and release or deactivate the second terminal policy association; sending a registration request (such as Nudm_UECM_Registration request) to a fourth communication device, where the registration request is used for indicating the fourth communication device to send a deregistration notification to the old first communication device, and the deregistration notification is used for indicating the old first communication device to trigger the third communication device to release the first terminal policy association;
triggering the third communication device to create a new third terminal policy association and release or deactivate the second terminal policy association, after a registration response sent by the fourth communication device is received, where the registration response is sent after the fourth communication device learns that the old first communication device releases the first terminal policy association;
triggering the third communication device to create a new third terminal policy association, and release or deactivate the second terminal policy association;
indicating a seventh communication device to release or deactivate the second terminal policy association, and triggering the third communication device to activate and modify the first terminal policy association;
indicating the seventh communication device to release or deactivate the second terminal policy association, and triggering the third communication device to release the first terminal policy association and create a new third terminal policy association; and
indicating the seventh communication device to release or deactivate the second terminal policy association, and triggering the third communication device to create a new third terminal policy association.

The indicating the seventh communication device to release or deactivate the second terminal policy association includes one of the following: the first communication device directly indicates the seventh communication device to release or deactivate the second terminal policy association; and the first communication device indicates the seventh communication device through the second communication device to release or deactivate the second terminal policy association.

The seventh communication device may be an SM-PCF.

A path for indicating the seventh communication device by the first communication device through the second communication device to release or deactivate the second terminal policy association may be as follows: the AMF sends a context request (context request) to the MME, where the context request contains an indication, indicating to deactivate or release the second terminal policy association, and the context request further includes index information of the AM-PCF (such as an AM-PCF ID or an AM-PCF IP address) and a second terminal policy association ID (that is, a UE policy association ID) and/or UE SUPI. After receiving the context request, the MME triggers a create session request (create session request) to the S-GW, and the above information (the indication, the index information of the AM-PCF, or the like) is also included in the create session request. The S-GW triggers a modify bearer request (modify bearer request) to the SMF+PGW-C, where the modify bearer request further includes the above information (the indication, the index information of the AM-PCF, or the like). Then, the SMF+PGW-C triggers a session policy association modification request SM policy association modification (Npcf_SMPolicyControl_Update) to the SM-PCF, and the session policy association modification request also contains the indication information and the index information of AM-PCF, that is, indicating the SM-PCF to deactivate or release the second terminal policy association. Finally, the SM-PCF triggers association deactivation or release: for example, releasing the second terminal policy association through a terminal policy association termination request UE policy association termination (Npcf_UEPolicyControl_Delete), or triggering a terminal policy modification request UE policy association modification (Npcf_UEPolicyControl _Update) to modify the second terminal policy association.

The embodiments of the application provide another method for processing a terminal policy association, which includes the following steps:

The sixth communication device sends second information to the seventh communication device, where the second information includes second indication information. The second indication information is used to indicate the seventh communication device to perform a fourth operation, and the fourth operation is an operation related to releasing or terminating a policy association of the terminal under the second network (for example, the 4G network).

Optionally, the sixth communication device may be, for example, a network element with a session management function (such as an SMF), or a network element with a packet data gateway control function (such as a PDN network element-C (PDN GateWay-C, PGW-C)), or a communication device with session management function, SMF, and packet data gateway control functions (such as a communication device integrating the SMF and the PGW-C). Certainly, it may alternatively be other communication devices.

Optionally, the seventh communication device may be a network element (such as an SM-PCF) that delivers session policies.

In an implementation, the sixth communication device sending the second information to the seventh communication device includes that the sixth communication device sends the second indication information to the seventh communication device in a case of determining that the terminal has accessed the first network (for example, the 5G network).

Optionally, the sixth communication device determining that the terminal has accessed the first network includes the sixth communication device determining that the terminal has accessed the first network from the second network.

Optionally, in a case of receiving fifth information, the sixth communication device determines that the terminal has accessed the first network. The fifth information is used to indicate the terminal to access the first network.

Optionally, in a case of receiving a context establishment request, the sixth communication device determines that the terminal has accessed the first network. The context establishment request includes: Nsmf_PDUSession_CreateSMContext Request (that is, PDU session create session management context operation). It should be noted that the Nsmf_PDUSession_CreateSMContext Request includes identification information of the UE (for example, a UE SUPI).

Optionally, after determining that the terminal has accessed the first network, the sixth communication device triggers to obtain third information from a binding support function (Binding Support Function, BSF), where the third information includes at least one of the following: index information of the AM-PCF or UE-PCF serving the terminal (such as an AM-PCF ID, an AM-PCF IP address, a UE-PCF ID, or a UE-PCF IP address); and a terminal identifier (for example, a UE SUPI or a UE GPSI). The sixth communication device obtains the third information from the BSF through Nbsf_Management discovery signaling.

In another implementation, the sixth communication sending the second information to the seventh communication device includes that the sixth communication device sends the second information to the seventh communication device in a case of receiving fourth information, where the fourth information includes third indication information, and the third indication information is used to indicate the sixth communication device to trigger execution of a fourth operation. It can be understood that the third indication information indicates the sixth communication device to trigger release or termination of a policy association of the terminal under the second network (for example, the 4G network). It can alternatively be understood that the third indication information indicates the sixth communication device to find the seventh communication device, so as to send the second indication information to the seventh communication device. It can alternatively be understood that the third indication information is used to indicate the sixth communication device to send the second indication information to the seventh communication device.

Optionally, the fourth information further includes at least one of the following: index information of the AM-PCF or UE-PCF serving the terminal (such as an AM-PCF ID, an IP address of the AM-PCF, a UE-PCF ID, and an IP address of the UE-PCF); and a terminal identifier (such as a UE SUPI or UE GPSI).

Optionally, the sixth communication device obtains the fourth information from the BSF through Nbsf_Management discovery signaling.

In an implementation, the sixth communication device receiving the fourth indication information includes that the sixth communication device receives fourth indication information sent by the first communication device (for example, an AMF). The fourth indication information may be carried in at least one of the following signaling:
Nsmf_PDUSession_CreateSMContext Request;
Nsmf_PDUSession_UpdateSMContext Request; and
any other core network signaling.

Optionally, after receiving the second information, the seventh communication device determines a third communication device or a policy association ID (UE policy association ID). It can be understood that after receiving the second information, the seventh communication device determines the policy association ID or determines the AM-PCF or UE-PCF serving the terminal.

Optionally, the second information may include a terminal identifier (such as a UE SUPI or UE GPSI), and the seventh communication device may determine the third communication device or the policy association ID (such as a UE policy association ID) based on the terminal identifier and a first correspondence. The first correspondence is a correspondence between terminal identifiers and index information of AM-PCFs or UE-PCFs serving such terminals, or a correspondence between terminal identifiers and policy association IDs. In an implementation, the seventh communication device stores a first correspondence.

In another optional implementation, the second information further includes at least one of the following: a terminal identifier (such as a UE SUPI or UE GPSI), index information of the AM-PCF or UE-PCF serving the terminal, and a policy association ID. The seventh communication device may directly determine the third communication device or policy association ID based on the second information.

Optionally, the second information may be sent in at least one of the following signaling:
Npcf_SMPolicyControl_Create request;
Npcf_SMPolicyControl_Update request; and
Npcf_SMPolicyControl_Delete request.

In another optional implementation, at least one of the following signaling may alternatively be sent to serve as the second indication information (it can be understood that the seventh communication device receives the second indication information when receiving at least one of the following signaling):
Npcf_SMPolicyControl_Create request;
Npcf_SMPolicyControl_Update request; and
Npcf_SMPolicyControl_Delete request.

Optionally, after determining the third communication device, the seventh communication device performs a fourth operation.

Optionally, the fourth operation includes: the seventh communication device sends fourth indication information to a third communication device, where the fourth indication information is used to indicate the third communication device to release or terminate a policy association of a terminal under a second network; or, the fourth operation may be that the seventh communication device sends terminal policy control deletion signaling to the third communication device, or sends terminal policy association termination signaling, or triggers a terminal policy association termination or release request.

Optionally, that the seventh communication device sends the fourth indication information to the third communication device includes: the seventh communication device sends Npcf_UEPolicyControl_Delete signaling to the third communication device to indicate the third communication device to release or terminate a policy association of the terminal under the second network. The signaling carries a terminal policy association ID and a UE identifier (a SUPI or GPSI).

Optionally, the seventh communication device sends terminal policy control deletion signaling to the third communication device, or sends terminal policy association termination signaling, or triggers a terminal policy association termination or release request, including: the seventh communication device sends the Npcf_UEPolicyControl_Delete signaling to the third communication device. The signaling carries a terminal policy association ID and a UE identifier (a SUPI or GPSI).

Optionally, after receiving the fourth indication information, the third communication device releases or terminates a policy association of the terminal under the second network. In an optional implementation, after the policy association of the terminal under the second network has been released or terminated, the seventh communication device sends a terminal policy association termination or release response (a success response) to the sixth communication device, and the sixth communication device sends the response to the first communication device (such as the AMF). After receiving the response, the first communication device performs at least one of the following:
the first communication device selects a UE-PCF under the first network for the terminal (for example, after the AMF triggers Nnrf_NFDiscovery_Request to the NRF, and then receives address information or an ID of the UE-PCF or AM-PCF of the terminal under the 5G network from the NRF through Nnrf_NFDiscovery_Response); and
the first communication device establishes a terminal policy association for the terminal under the second network (for example, after the AMF triggers to establish a terminal policy association to the UE-PCF or AM-PCF queried from the NRF: sends Npcf_UEPolicyControl_Create, and then receives Npcf_UEPolicyControl_Response from the AM-PCF or UE-PCF).

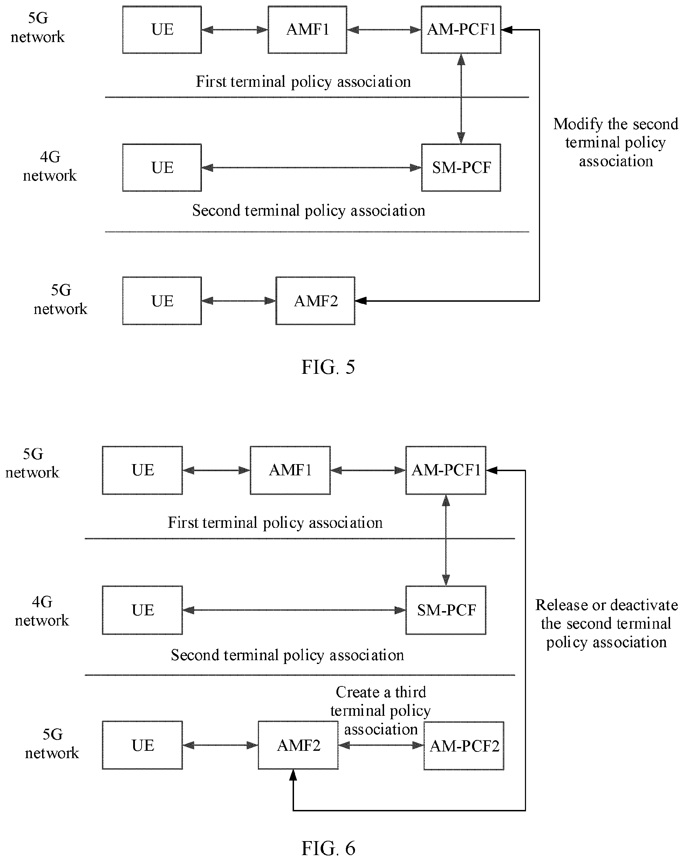

Refer to FIG. 5. FIG. 5 is a schematic diagram of a method for processing a terminal policy association when AMF is changed and AM-PCF remains unchanged the terminal re-accesses the 5G network from the 4G network according to the embodiments of this application. The AMF2 (a new first communication device) may trigger a first operation, where the first operation may be modifying the second terminal policy association. That is, the SM-PCF in the second terminal policy is modified to AMF2, for example, using Npcf_UEPolicyControl_Update signaling, and the signaling carries a UE policy association ID (indicating to the AM-PCF which policy association needs to be modified), so as to provide terminal policy information for the terminal in the first network.

(4) In a case of determining based on the first information that the first communication device is changed and the third communication device is changed after the terminal re-accesses the first network from the second network, the first communication device triggers a first operation, where the first operation includes one of the following:
creating a third terminal policy association, releasing the first terminal policy association, and releasing or deactivating the second terminal policy association; and
creating a third terminal policy association, and releasing or deactivating the second terminal policy association.

In this embodiment of this application, optionally, in a case of determining based on the first information that the first communication device is changed and the third communication device is changed after the terminal re-accesses the first network from the second network, that the first communication device triggers the first operation includes one of the following:
triggering the old third communication device to release the first terminal policy association and release or deactivate the second terminal policy association; and triggering the newly selected third communication device to create a new third terminal policy association; and
indicating the old first communication device to trigger the old third communication device to release the first terminal policy association and release or deactivate the second terminal policy association; and triggering the newly selected third communication device to create a new third terminal policy association;
indicating the second communication device to inform the old first communication device to trigger the old third communication device to release the first terminal policy association and release or deactivate the second terminal policy association; and triggering the newly selected third communication device to create a new third terminal policy association;
triggering the newly selected third communication device to create a new third terminal policy association, and sending a registration request (such as Nudm_UECM_Registration request) to a fourth communication device, where the registration request is used for indicating the fourth communication device to send a deregistration notification (such as Nudm_UECM_DeregistrationNotification) to the old first communication device, and the deregistration notification is used for indicating the old first communication device to trigger the old third communication device to release the first terminal policy association and release or deactivate the second terminal policy association;
triggering the newly selected third communication device to create a new third terminal policy association after receiving a registration response (such as Nudm_UECM_Registration response) sent by the fourth communication device, where the registration response is sent after the fourth communication device learns that the old first communication device releases the first terminal policy association and releases or deactivates the second terminal policy association;
triggering the old third communication device to release or deactivate the second terminal policy association; and triggering a newly selected third communication device to create a new third terminal policy association;
indicating the old first communication device to trigger the old third communication device to release or deactivate the second terminal policy association; and triggering the newly selected third communication device to create a new third terminal policy association;
indicating the second communication device to inform the old first communication device to trigger the old third communication device to release or deactivate the second terminal policy association; and triggering the newly selected third communication device to create a new third terminal policy association;
triggering the newly selected third communication device to create a new third terminal policy association, and sending a registration request to the fourth communication device, where the registration request is used for indicating the fourth communication device to send a deregistration notification to the old first communication device, and the deregistration notification is used for indicating the old first communication device to trigger the old third communication device to release or deactivate the second terminal policy association;
triggering the newly selected third communication device to create a new third terminal policy association, after receiving a registration response sent by the fourth communication device, where the registration response is sent after the fourth communication device learns that the old first communication device releases or deactivates the second terminal policy association;
indicating the seventh communication device to release or deactivate the second terminal policy association, triggering the old third communication device to release the first terminal policy association, and triggering the newly selected third communication device to create a new third terminal policy association;
indicating the seventh communication device to release or deactivate the second terminal policy association, indicating the old first communication device to trigger the old third communication device to release the first terminal policy association, and triggering the newly selected third communication device to create a new third terminal policy association; and
indicating the seventh communication device to release or deactivate the second terminal policy association, and triggering the newly selected third communication device to create a new third terminal policy association.

The indicating the seventh communication device to release or deactivate the second terminal policy association includes one of the following: the first communication device directly indicates the seventh communication device to release or deactivate the second terminal policy association; and the first communication device indicates the seventh communication device through the second communication device to release or deactivate the second terminal policy association.

The seventh communication device is located in the second network, and the seventh communication device is used to provide session policy services for a terminal in the second network.

A path for indicating the seventh communication device by the first communication device through the second communication device to release or deactivate the second terminal policy association may be as follows: the AMF sends a context request (context request) to the MME, where the context request contains an indication, indicating to deactivate or release the second terminal policy association, and the context request further includes index information of the AM-PCF (such as an AM-PCF ID or an AM-PCF IP address) and a second terminal policy association ID (that is, a UE policy association ID) and/or UE SUPI. After receiving the context request, the MME triggers a create session request (create session request) to the S-GW, and the above information (the indication, the index information of the AM-PCF, or the like) is also included in the create session request. The S-GW triggers a modify bearer request (modify bearer request) to the SMF+PGW-C, where the modify bearer request further includes the above information (the indication, the index information of the AM-PCF, or the like). Then, the SMF+PGW-C triggers a session policy association modification request SM policy association modification (Npcf_SMPolicyControl_Update) to the SM-PCF, and the session policy association modification request also contains the indication information and the index information of AM-PCF, that is, indicating the SM-PCF to deactivate or release the second terminal policy association. Finally, the SM-PCF triggers association deactivation or release: for example, releasing the second terminal policy association through a terminal policy association termination request UE policy association termination (Npcf_UEPolicyControl_Delete), or triggering a terminal policy modification request UE policy association modification (Npcf_UEPolicyControl _Update) to modify the second terminal policy association.

Refer to FIG. 6. FIG. 6 is a schematic diagram of a method for processing a terminal policy association when the AMF is changed and the AM-PCF is changed after the terminal re-accesses the 5G network from the 4G network according to the embodiments of this application. The AMF2 (a new first communication device) may trigger a first operation, where the first operation includes creating a new third terminal policy association and releasing or deactivating the second terminal policy association (in this case, the first terminal policy may have been released when the terminal accesses the 4G network from the 5G network).

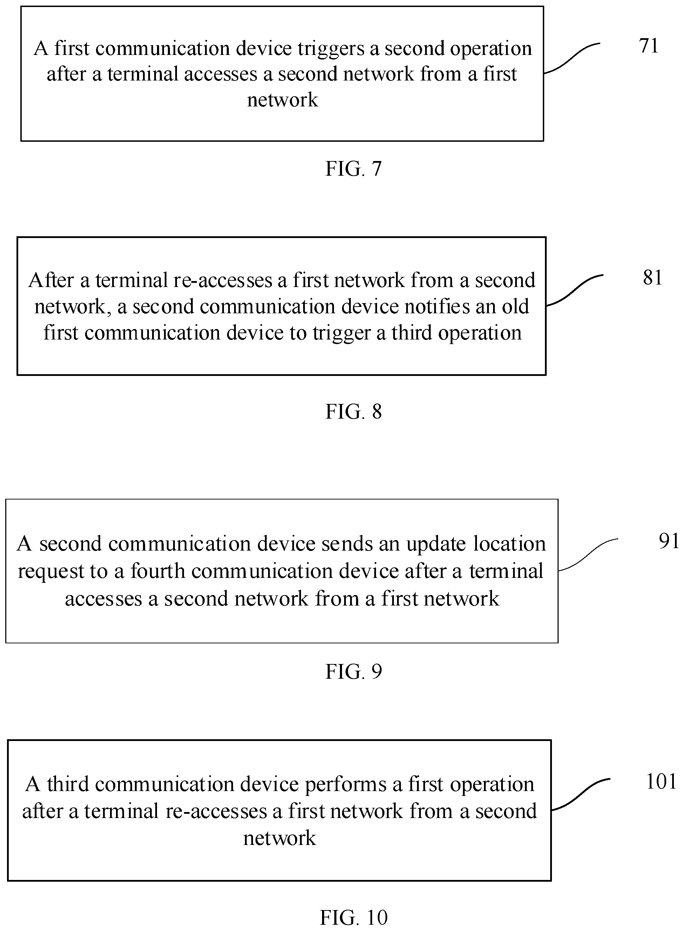

Refer to FIG. 7. An embodiment of the application further provides a method for processing a terminal policy association, including the following steps:

Step 71: A first communication device triggers a second operation after a terminal re-accesses a second network from a first network, where the second operation includes one of the following:
releasing or deactivating a first terminal policy association;
retaining terminal policy information;
establishing a second terminal policy association; and
modifying the first terminal policy association; where
the first terminal policy association is used for obtaining terminal policy information by the terminal in the first network;
the second terminal policy association is used for obtaining terminal policy information by the terminal in the second network;
the first communication device is located in the first network; and
the first network and the second network use different radio access technologies.

According to this embodiment of the application, in the processing method in which the first communication device provides a terminal policy association for the terminal accessing the second network from the first network, the terminal can still obtain terminal policy information based on the terminal policy association provided by the network side after accessing the second network from the first network.

In this embodiment of this application, optionally, the first communication device may be, for example, an AMF. Certainly, it may alternatively be other communication devices.

In this embodiment of this application, optionally, the first network may be, for example, a 5G network, and the second network may be a 4G network. Certainly, it may alternatively be other networks.

In the 5G system, to send terminal policy information to each terminal, it is necessary to establish one terminal policy association for each terminal. However, after the terminal accesses 4G, because the terminal is no longer under 5G, there may be a problem of deregistration. As a result of deregistration, the terminal policy association may be released and the terminal policy information may also be deleted. In this embodiment of this application, after the terminal accesses the 4G network from the 5G network, the terminal policy information may be retained, so as to provide the terminal policy information for the terminal under the 4G network.

In this embodiment of the present invention, modifying the first terminal policy association is modifying the first terminal policy association into a terminal policy association that may provide terminal policy information for the terminal in the second network.

Optionally, the method in this embodiment of this application further includes:
receiving, by the first communication device, a terminal policy acquisition request sent by a second communication device, where the terminal policy acquisition request is used for obtaining terminal policy information for the terminal;
sending the terminal policy control acquisition request to a third communication device; and
receiving terminal policy information sent by the third communication device and sending it to the second communication device; where
the third communication device is located in the first network; and
the second communication device is located in the second network.

Optionally, the second communication device may be, for example, an MME. Certainly, it may alternatively be other communication devices.

Optionally, the third communication device may be, for example, an AM-PCF. Certainly, it may alternatively be other communication devices.

In this embodiment of this application, after the terminal accesses the second network (for example, the 4G network) from the first network (for example, the 5G network), the terminal policy information may alternatively be obtained from the third communication device, so as to provide a terminal policy service.

Optionally, the method in this embodiment of this application further includes:
the first communication device sends first information to a second communication device or a fourth communication device, where the first information includes at least one of the following:
index information of the first communication device;
index information of the third communication device;
an identifier (ID) of the first terminal policy association; and
a terminal identifier; where
the first information is used for at least one of the following:
   establishing a second terminal policy association or modifying a first terminal policy association; and
   obtaining terminal policy information; where
   the fourth communication device provides unified data management services for both the first network and the second network.

In this embodiment of this application, the fourth communication device may be, for example, a UDM, or an HSS, or a communication device integrating the UDM and the HSS. Certainly, it may alternatively be other communication devices.

In this embodiment, it should be noted that when a communication interface is present between the first communication device and the second communication device, for example, when the first communication device is an AMF and the second communication device is an MME, and the communication interface between them is an N26 interface, the first communication device may send the first information to the second communication device. If no communication interface is present between the first communication device and the second communication device, the first communication device may send the first information to the fourth communication device. Certainly, when a communication interface is present between the first communication device and the second communication device, the first communication device may alternatively send the first information to the fourth communication device.

Optionally, the index information of the first communication device includes at least one of the following: a first communication device ID and a first communication device address; and/or, the index information of the third communication device includes at least one of the following: a third communication device ID and a third communication device address. The address is, for example, an IP address, an FQDN, or a URL.

In this embodiment of this application, optionally, before triggering the second operation, the method further includes: receiving a deregistration notification (such as Nudm_UECM_DeregistrationNotification) sent by the fourth communication device, where the deregistration notification is used to indicate the first communication device to trigger the second operation, and the fourth communication device provides unified data management services for both the first network and the second network.

In some embodiments of this application, optionally, before triggering the second operation, the method further includes:
receiving a first request sent by a sixth communication device, where the first request is used for at least one of the following: triggering the second operation; and obtaining terminal policy information; where the SMF+PGW-C requests the AMF to perform a second operation to establish a terminal policy association and obtain terminal policy information.

The method further includes receiving the terminal policy information sent by the third communication terminal and sending it to the sixth communication device; where
the sixth communication device provides session management services for both the first network and the second network.

In this embodiment of this application, optionally, the sixth communication device may be, for example, an SMF, or a PGW-C (packet gateway control plane function), or a communication device integrating the SMF and the PGW-C. Certainly, it may alternatively be other communication devices.

In some embodiments of this application, optionally, before triggering the second operation, the method further includes:
receiving a first request sent by a seventh communication device, where the first request is used for at least one of the following: triggering the second operation; and obtaining terminal policy information; where the SM-PCF requests the AMF to perform a second operation to establish a terminal policy association (for example, establish through Npcf_ UEPolicyControl Create Request) and obtain terminal policy information.

The method further includes receiving terminal policy information sent by the third communication terminal and sending it to the seventh communication device; where
the seventh communication device is located in the second network, and the seventh communication device is used to provide session policy services for a terminal in the second network.

In this embodiment of this application, optionally, the seventh communication device may be, for example, an SM-PCF. Certainly, it may alternatively be other communication devices.

In this embodiment of this application, optionally, before triggering the second operation, the method further includes:
obtaining a trigger condition for triggering the second operation, where the trigger condition includes at least one of the following:
receiving a context request (context request) sent by a second communication device, where the context request includes at least one of the following: a capability indication that the terminal supports receiving terminal policy information under the second network; and indication information that the terminal requests to obtain terminal policy information;
receiving a terminal policy acquisition request sent by the second communication device, where the terminal policy acquisition request is used for obtaining terminal policy information for the terminal; and the MME requests the AMF to obtain the terminal policy information, for example, the MME sends a context request to the AMF to request the terminal policy information, and the AMF sends the policy information to the MME through a context response;
receiving a tracking area update or attach request of the terminal; and
detecting that the terminal accesses the second network from the first network. After the terminal accesses the second network, obtaining the terminal policy information is triggered.

Refer to FIG. 8. An embodiment of the present invention further provides a method for processing a terminal policy association, including the following steps.

Step 81: After a terminal re-accesses a first network from a second network, a second communication device triggers a third operation, where the third operation includes at least one of the following:
releasing a first terminal policy association; and
releasing or deactivating a second terminal policy association; where
the first terminal policy association is used for obtaining terminal policy information by the terminal in the first network;
the second terminal policy association is used for obtaining terminal policy information by the terminal in the second network;
the second communication device is located in the second network; and
the first network and the second network use different radio access technologies.

According to this embodiment of the application, in the processing method in which the second communication device provides a terminal policy association for the terminal re-accessing the first network from the second network, the terminal can still obtain terminal policy information based on the terminal policy association provided by the network side after re-accessing the first network from the second network.

In this embodiment of this application, optionally, the second communication device may be, for example, an MME. Certainly, it may alternatively be other communication devices.

In this embodiment of this application, optionally, the first network may be, for example, a 5G network, and the second network may be a 4G network. Certainly, it may alternatively be other networks.

In this embodiment of this application, optionally, the triggering the third operation includes: the second communication device triggers the third operation according to an indication of the new first communication device; where the new first communication device is a communication device that maintains the terminal policy association for the terminal in the first network after the terminal re-accesses the first network from the second network.

In this embodiment of this application, optionally, that the second communication device triggers the third operation after the terminal re-accesses the first network from the second network includes:
after the terminal re-accesses the first network from the second network, the second communication device indicates the old first communication device to trigger a third operation, where the third operation includes at least one of the following:
releasing a first terminal policy association; and
releasing or deactivating the second terminal policy association; and/or
indicating, by the second communication device, a seventh communication device to trigger a third operation, after the terminal re-accesses the first network from the second network, where the third operation includes at least one of the following:
   releasing or deactivating a second terminal policy association; where
   the old first communication device is a communication device that maintains a terminal policy association for the terminal in the first network before the terminal accesses the second network; and
   the seventh communication device is located in the second network, and the seventh communication device is used to provide session policy services for a terminal in the second network.

In this embodiment of this application, optionally, the first communication device may be, for example, an AMF. Certainly, it may alternatively be other communication devices. In this embodiment of this application, a path for indicating the first communication device to trigger the third operation according to the indication of the new first communication device may be as follows: the AMF sends a context request (context request) to the MME, where the context request contains an indication, indicating to deactivate or release the second terminal policy association, and the context request further includes index information of the AM-PCF (such as an AM-PCF ID or an AM-PCF IP address) and a second terminal policy association ID (that is, a UE policy association ID) and/or UE SUPI. After receiving the context request, the MME triggers a create session request (create session request) to the S-GW, and the above information (the indication, the index information of the AM-PCF, or the like) is also included in the create session request. The S-GW triggers a modify bearer request (modify bearer request) to the SMF+PGW-C, where the modify bearer request further includes the above information (the indication, the index information of the AM-PCF, or the like). Then, the SMF+PGW-C triggers a session policy association modification request SM policy association modification (Npcf_SMPolicyControl _Update) to the SM-PCF, and the session policy association modification request also contains the indication information and the index information of AM-PCF, that is, indicating the SM-PCF to deactivate or release the second terminal policy association. Finally, the SM-PCF triggers association deactivation or release: for example, releasing the second terminal policy association through a terminal policy association termination request UE policy association termination (Npcf_UEPolicyControl_Delete), or triggering a terminal policy modification request UE policy association modification (Npcf_UEPolicyControl _Update) to modify the second terminal policy association.

Optionally, the method in this embodiment of this application further includes: the second communication device sends first information to a new first communication device, where the first information includes at least one of the following:
index information of an old first communication device;
index information of an old third communication device;
an identifier ID of the first terminal policy association; and
a terminal identifier; where
the first information is used for at least one of the following:
   finding the old third communication device; and
   modifying or releasing a terminal policy association maintained by the old third communication device; where
   the new first communication device is a communication device that maintains a terminal policy association for the terminal in the first network after the terminal re-accesses the first network from the second network; and
   the old third communication device is a communication device that maintains a terminal policy association for the terminal in the first network before the terminal accesses the second network.

In this embodiment of this application, the third communication device may be, for example, an AM-PCF. Certainly, it may alternatively be other communication devices.

In this embodiment of this application, optionally, the index information of the old first communication device includes at least one of the following: a first communication device ID and a first communication device address; and/or, the index information of the old third communication device includes at least one of the following: a third communication device ID and a third communication device address. The address is, for example, an IP address, an FQDN, or a URL.

In this embodiment of this application, optionally, the sending the first information to the new first communication device includes:
receiving, by the second communication device, a context request sent by the new first communication device, where the context request is used for requesting to obtain the first information; and
sending, by the second communication device, a context response to the new first communication device, where the context response carries the first information.

The second communication device sends a forward relocation request (forward relocation request), where the forward relocation request carries the first information.

Refer to FIG. 9. An embodiment of the application further provides a method for processing a terminal policy association, including the following steps:
Step 91: A second communication device sends an update location request (location update request) to a fourth communication device after a terminal accesses a second network from a first network, where the update location request carries first indication information, and the first indication information is used to indicate one of the following:
not sending a deregistration notification to an old first communication device (for example, not sending Nudm_UECM_DeregistrationNotification); and
sending a deregistration notification (such as Nudm_UECM_DeregistrationNotification) to the old first communication device, where the deregistration notification is used for indicating at least one of the following: retaining or releasing or deactivating a first terminal policy association, and retaining terminal policy information; that is, although the deregistration notification is sent, the terminal policy information is still stored; where
the first terminal policy association is used for obtaining terminal policy information by the terminal in the first network;
the second communication device is located in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

According to this embodiment of the application, in the processing method in which the second communication device provides a terminal policy association for the terminal accessing the second network from the first network, the terminal can still obtain terminal policy information based on the terminal policy association provided by the network side after accessing the second network from the first network.

In this embodiment of this application, optionally, the second communication device may be, for example, an MME. Certainly, it may alternatively be other communication devices.

In this embodiment of this application, optionally, the first communication device may be, for example, an AMF. Certainly, it may alternatively be other communication devices.

In this embodiment of this application, optionally, the fourth communication device may be, for example, a UDM, or an HSS, or a communication device integrating the UDM and the HSS. Certainly, it may alternatively be other communication devices.

In this embodiment of this application, optionally, the first network may be, for example, a 5G network, and the second network may be a 4G network. Certainly, it may alternatively be other networks.

Optionally, the method in this embodiment of this application further includes:
sending, by the second communication device, a terminal policy acquisition request to the old first communication device, where the terminal policy acquisition request is used for obtaining terminal policy information for the terminal; and
receiving terminal policy information sent by an old second communication device and sending it to the terminal;
   or
sending, by the second communication device, a session establishment request to a sixth communication device, where the session establishment request includes indication information for obtaining the terminal policy information; for example, the MME sends a create session request (create session request) to the SMF+PGW-C, where the request includes one indication requesting to obtain UE policy information for the terminal. Then, the SMF+PGW-C indicates the SM-PCF to establish a terminal policy association for obtaining a terminal policy. To establish a policy association, the ID and IP address of the AM-PCF are required, and such information is included in the first information and obtained from the AMF by the MME, or indicated by the MME to the SMF+PGW-C, and then indicated by the SMF+PGW-C to the SM-PCF.

The second communication device receives the terminal policy information sent by the sixth communication device and sends it to the terminal; where
the sixth communication device provides session management services for both the first network and the second network.

In this embodiment of this application, optionally, the sixth communication device may be, for example, an SMF, or a PGW-C, or a communication device integrating the SMF and the PGW-C. Certainly, it may alternatively be other communication devices.

In this embodiment of this application, after the terminal accesses the second network (for example, the 4G network) from the first network (for example, the 5G network), the terminal policy information may alternatively be obtained, so as to provide a terminal policy service.

In some embodiments of this application, optionally, the sending, by the second communication device, a terminal policy acquisition request to the old first communication device includes:
receiving, by the second communication device, a tracking area update request (TAU update request) sent by the terminal, where the tracking area update request carries at least one of the following: a capability indication that the terminal supports receiving terminal policy information under the second network; and indication information that the terminal requests to obtain terminal policy information; and
sending, by the second communication device, a context request (context request) to the old first communication device based on the tracking area update request, where the context request carries the terminal policy acquisition request;

In some embodiments of this application, optionally, the sending, by the second communication device, a terminal policy acquisition request to the old first communication device includes: sending, by the second communication device, a terminal policy acquisition request to the old first communication device after receiving a session creation response.

Optionally, the method in this embodiment of this application further includes: the second communication device receives first information sent by the old first communication device, where the first information includes at least one of the following:
index information of an old first communication device;
index information of an old third communication device;
an identifier ID of the first terminal policy association; and
a terminal identifier; where
the first information is used for at least one of the following:
   establishing a second terminal policy association or modifying a first terminal policy association; and
   obtaining terminal policy information; where
   the old third communication device is a communication device that maintains a terminal policy association for the terminal in the first network before the terminal accesses the second network; and
   the second terminal policy association is used for obtaining terminal policy information by the terminal in the second network.

Optionally, the index information of the old first communication device includes at least one of the following: a first communication device ID and a first communication device address; and/or, the index information of the old third communication device includes at least one of the following: a third communication device ID and a third communication device address. The address is, for example, an IP address, an FQDN, or a URL.

Refer to FIG. 10. An embodiment of the application further provides a method for processing a terminal policy association, including the following steps:

Step 101: A third communication device performs a first operation after a terminal re-accesses a first network from a second network, where the first operation includes one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; where
the first terminal policy association and the third terminal policy association are used for obtaining terminal policy information by the terminal in the first network;
the second terminal policy association is used for obtaining terminal policy information by the terminal in the second network;
the third communication device is located in the first network; and
the first network and the second network use different radio access technologies.

According to this embodiment of the application, in the processing method in which the third communication device provides a terminal policy association for the terminal re-accessing the first network from the second network, the terminal can still obtain terminal policy information based on the terminal policy association provided by the network side after re-accessing the first network from the second network.

In this embodiment of this application, optionally, the third communication device may be, for example, an AM-PCF. Certainly, it may alternatively be other communication devices.

In this embodiment of this application, optionally, the first network may be, for example, a 5G network, and the second network may be a 4G network. Certainly, it may alternatively be other networks.

In this embodiment of the present invention, modifying the second terminal policy association means modifying the second terminal policy association into a terminal policy association capable of providing terminal policy information for the terminal in the first network. For example, the second terminal policy association is modified through Npcf_UEPolicyControl Update.

In this embodiment of this application, optionally, the performing a first operation includes: performing, by the third communication device, the first operation based on trigger information sent by a first communication device; where the first communication device is a communication device that maintains a terminal policy association for the terminal in the first network.

In this embodiment of this application, optionally, the first communication device may be, for example, an AMF. Certainly, it may alternatively be other communication devices.

In this embodiment of this application, optionally, the trigger information includes at least one of the following:
a terminal policy association establishment request (such as Npcf_UEPolicyControl_Create), where the terminal policy association establishment request is used for obtaining terminal policy information;
a terminal policy association modification request (such as Npcf_UEPolicyControl_Update), where the terminal policy association modification request is used for obtaining terminal policy information; and
a terminal policy association termination request (such as Npcf_UEPolicyControl_Delete), where the terminal policy association termination request is used for terminating provision of terminal policy information by the third communication device.

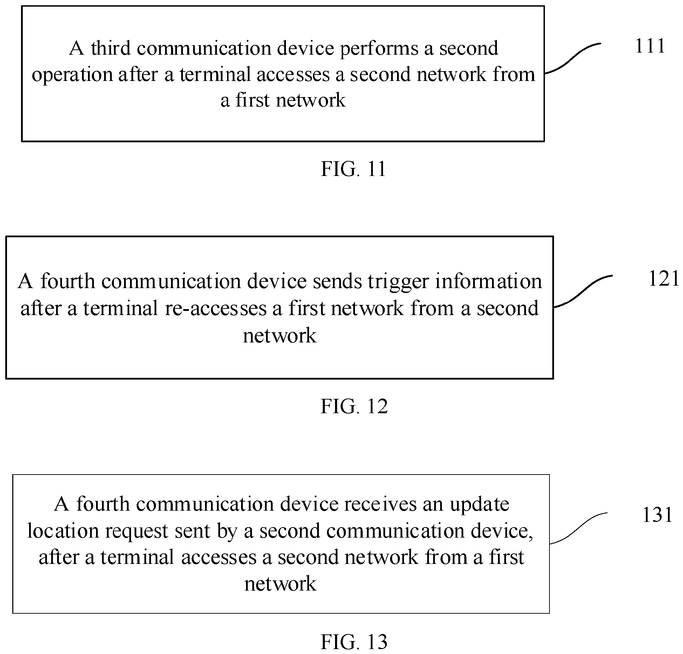

Refer to FIG. 11. An embodiment of the application further provides a method for processing a terminal policy association, including the following steps:

Step 111: A third communication device performs a second operation after a terminal accesses a second network from a first network, where the second operation includes one of the following:
releasing or deactivating a first terminal policy association;
retaining terminal policy information;
establishing a second terminal policy association; and
modifying the first terminal policy association; where
the first terminal policy association is used for obtaining terminal policy information by the terminal in the first network;
the second terminal policy association is used for obtaining terminal policy information by the terminal in the second network;
the third communication device is located in the first network; and
the first network and the second network use different radio access technologies.

According to this embodiment of the application, in the processing method in which the third communication device provides a terminal policy association for the terminal accessing the second network from the first network, the terminal can still obtain terminal policy information based on the terminal policy association provided by the network side after accessing the second network from the first network.

In this embodiment of this application, optionally, the first network may be, for example, a 5G network, and the second network may be a 4G network. Certainly, it may alternatively be other networks.

In this embodiment of this application, optionally, the performing a second operation includes: performing, by the third communication device, the second operation based on trigger information sent by a first communication device; where the first communication device is located in the first network, and is a communication device that maintains a terminal policy association for the terminal in the first network before the terminal accesses the second network.

In this embodiment of this application, optionally, the first communication device may be, for example, an AMF. Certainly, it may alternatively be other communication devices.

In this embodiment of this application, optionally, the trigger information includes at least one of the following:
a terminal policy association establishment request (such as Npcf_UEPolicyControl_Create), where the terminal policy association establishment request is used for obtaining terminal policy information;
a terminal policy association modification request (such as Npcf_UEPolicyControl_Update), where the terminal policy association modification request is used for obtaining terminal policy information; and
a terminal policy association termination request (such as Npcf_UEPolicyControl_Delete), where the terminal policy association termination request is used for terminating provision of terminal policy information by the third communication device.

Refer to FIG. 12. An embodiment of the application further provides a method for processing a terminal policy association, including the following steps:

Step 121: A fourth communication device sends trigger information after a terminal re-accesses a first network from a second network, where the trigger information is used to trigger an old first communication device to trigger at least one of the following:
releasing a first terminal policy association; and
releasing or deactivating a second terminal policy association; where
the first terminal policy association is used for obtaining terminal policy information by the terminal in the first network;
the second terminal policy association is used for obtaining terminal policy information by the terminal in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

According to this embodiment of the application, in the processing method in which the fourth communication device provides a terminal policy association for the terminal re-accessing the first network from the second network, the terminal can still obtain terminal policy information based on the terminal policy association provided by the network side after re-accessing the first network from the second network.

In this embodiment of this application, optionally, the first network may be, for example, a 5G network, and the second network may be a 4G network. Certainly, it may alternatively be other networks.

In this embodiment of this application, optionally, the fourth communication device may be, for example, a UDM, or an HSS, or a communication device integrating the UDM and the HSS. Certainly, it may alternatively be other communication devices.

In this embodiment of this application, optionally, the first communication device may be, for example, an AMF. Certainly, it may alternatively be other communication devices.

In this embodiment of this application, optionally, the sending trigger information includes: sending, by the fourth communication device, the trigger information to a second communication device, a new first communication device, or an old first communication device; where
the second communication device is located in the second network; and
the new first communication device is a communication device that maintains a terminal policy association for the terminal in the first network after the terminal re-accesses the first network from the second network.

In this embodiment of this application, optionally, the second communication device may be, for example, an MME. Certainly, it may alternatively be other communication devices.

Optionally, the method in this embodiment of this application further includes: the fourth communication device sends the first information to a new first communication device, where the first information includes at least one of the following:
index information of an old first communication device;
index information of an old third communication device;
an identifier ID of the first terminal policy association; and
a terminal identifier; where
the first information is used for at least one of the following:
   finding the old third communication device; and
   modifying or releasing a terminal policy association maintained by the old third communication device; where
   the old first communication device and the old third communication device are communication devices that maintain a terminal policy association for the terminal in the first network before the terminal accesses the second network.

In this embodiment of this application, optionally, the third communication device may be, for example, an AM-PCF. Certainly, it may alternatively be other communication devices.

Optionally, the index information of the old first communication device includes at least one of the following: a first communication device ID and a first communication device address; and/or, the index information of the old third communication device includes at least one of the following: a third communication device ID and a third communication device address. The address is, for example, an IP address, an FQDN, or a URL.

Refer to FIG. 13. An embodiment of the application further provides a method for processing a terminal policy association, including the following steps:

Step 131: A fourth communication device receives an update location request sent by a second communication device after a terminal accesses a second network from a first network, where the update location request carries first indication information, and the first indication information is used to indicate one of the following:
not sending a deregistration notification to an old first communication device (for example, not sending Nudm_UECM_DeregistrationNotification); and
sending a deregistration notification (such as Nudm_UECM_DeregistrationNotification) to the old first communication device, where the deregistration notification is used for indicating the old first communication device to trigger at least one of the following: retaining or releasing or deactivating a first terminal policy association, and retaining terminal policy information; where
the first terminal policy association is used for obtaining terminal policy information by the terminal in the first network;
the second communication device is located in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

According to this embodiment of the application, in the processing method in which the fourth communication device provides a terminal policy association for the terminal accessing the second network from the first network, the terminal can still obtain terminal policy information based on the terminal policy association provided by the network side after accessing the second network from the first network.

In this embodiment of this application, optionally, the first network may be, for example, a 5G network, and the second network may be a 4G network. Certainly, it may alternatively be other networks.

In this embodiment of this application, optionally, the fourth communication device may be, for example, a UDM, or an HSS, or a communication device integrating the UDM and the HSS. Certainly, it may alternatively be other communication devices.

In this embodiment of this application, optionally, the first communication device may be, for example, an AMF. Certainly, it may alternatively be other communication devices.

In this embodiment of this application, optionally, the second communication device may be, for example, an MME. Certainly, it may alternatively be other communication devices.

The following describes the method for processing a terminal policy association in the embodiments of this application with reference to specific application scenarios.

### Embodiment 1 of the present invention:

In this embodiment of this application, the terminal is in an idle state (idle state), and the terminal accesses the 4G network from the 5G network, and the N26 interface is supported between the AMF in the 5G network and the MME in the 4G network, so that signaling can be exchanged.

In this embodiment of this application, after the terminal accesses the 4G network from the 5G network and is in the idle state, tracking area update (Tracking Area Update, TAU) may be first triggered. In the process of TAU, providing URSP rules for the terminal is first considered and then the issue of policy association (UE policy association) is considered.

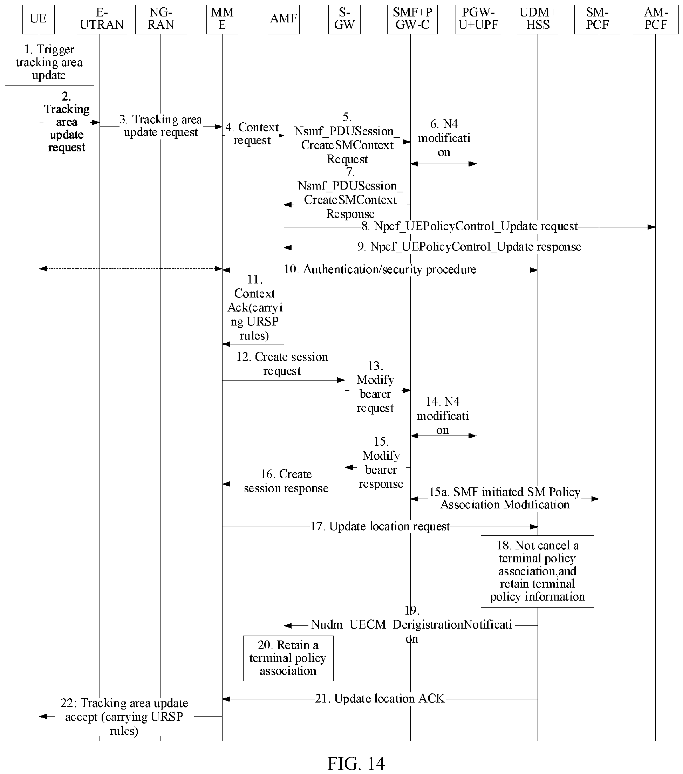

Refer to FIG. 14. The method for processing a terminal policy association in this embodiment of this application includes:
Step 1: A terminal triggers TAU (TAU trigger).
Step 2: The terminal sends a TAU request (TAU request) to an evolved UMTS terrestrial radio access network (which is a name of a base station in the 4G network, Evolved Universal Terrestrial Radio Access Network, e-UTRAN). The TAU request includes at least one of the following: a capability indication that the terminal supports receiving URSP rules under the 4G network; and indication information that the terminal requests to obtain URSP rules.
Step 3: The E-UTRAN (4G base station) sends the TAU request to the MME, where the TAU request includes at least one of the following: a capability indication that the terminal supports receiving URSP rules under the 4G network; and indication information that the terminal requests to obtain URSP rules.
Step 4: The MME sends a context request (context request) to the AMF, where the context request includes at least one of the following: a capability indication that the terminal supports receiving URSP rules under the 4G network; and indication information that the terminal requests to obtain URSP rules.
Step 5 to Step 7 are a process of establishing a session management context (Session management context).
Step 8: After receiving the context request, the AMF learns that the terminal needs to obtain URSP rules, and then the AMF triggers a UE policy control update (UE policy control update) to the AM-PCF to obtain URSP rules for the terminal. In this embodiment, the AMF triggers the UE policy control update to the Npcf_UEPolicyControl_Update request.
Step 9: The AM-PCF sends URSP rules to the AMF through Npcf_UEPolicyControl_Update response.
   In this embodiment of the application, steps 8 and 9 may alternatively be performed after step 16, that is, after the MME receives the create session response (create session response) in step 16, the MME triggers a URSP rule acquisition request to the AMF, and then the AMF performs steps 8 and 9 again.
Step 10: Verification and security process.
Step 11: The AMF sends a context acknowledgment (context ACK)(or also referred to as a context response, sending the first information) to the MME, where the context ACK carries the URSP rules sent to the terminal. In addition, the AMF may further send the first information to the MME, where the first information includes at least one of the following: index information of the AM-PCF, index information of the AMF, a UE policy association ID, and a terminal identifier. The terminal identifier may be, for example, a UE subscription permanent identifier (Subscription Permanent Identifier, SUPI). The index information of the AM-PCF includes at least one of the following: an AM-PCF ID, an AM-PCF IP address, and an AM-PCF FQDN (fully qualified domain name).
Step 12 to Step 16 are used to establish a session (session).

If steps 8 to 9 have not been executed, that is, URSP rules have not been obtained, then after step 16, after receiving the create session response, the MME may indicate the AMF (for example, through the context request) to obtain URSP rules. After receiving the indication from the MME, the AMF sends an Npcf_UEPolicyControl_Update request to the AM-PCF to obtain URSP rules.

After step 15a, the SM-PCF may establish a terminal policy association in 4G with the AM-PCF. For example, the SM-PCF triggers an Npcf_UEPolicyControl_Create request to the AM-PCF, and the index information of AM-PCF such as an AM-PCF ID or AM-PCF IP address is sent to the MME (context response) through the AMF, and then sent to SM-PCF by the MME.

Step 17: The MME triggers one update location request (update location request, originally used to trigger the AMF in the 5G network to release all UE contexts) to the UDM+HSS, where the update location request has a newly added first indication information used for indicating at least one of the following:
1: not sending a deregistration notification (such as Nudm_UECM_DeregistrationNotification) to the AMF; and
2: sending a deregistration notification to the AMF, where the deregistration notification is used for indicating at least one of the following: retaining or releasing or deactivating the first terminal policy association (the terminal policy association in the 5G network) and retaining the terminal policy information.

Deactivation means that when the AM-PCF receives new terminal policy information, such as URSP rules, the terminal policy information cannot be sent to the UE because a terminal policy association of the AM-PCF, the AMF, and the UE has been deactivated.

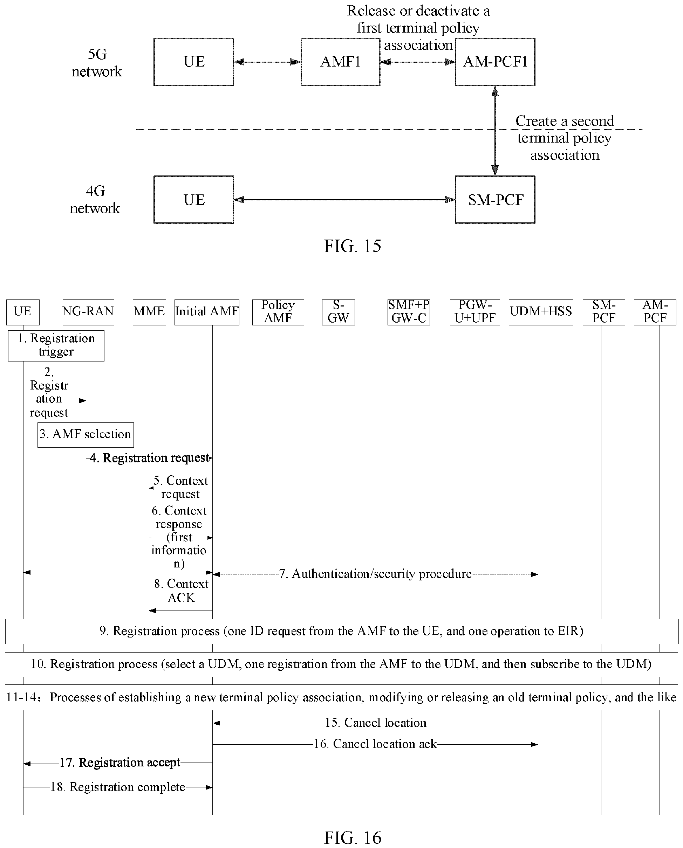

Refer to FIG. 15. In FIG. 15, after accessing the 4G network from the 5G network, the terminal triggers release or deactivation of the first terminal policy association (the terminal policy association in the 5G network) and creates a new second terminal policy association (the terminal policy association in the 4G network).

In addition, in step 17, the MME may alternatively send the first information to the UDM+HSS through an update location request for storage for subsequent extraction. The UDM can store the first information.

Step 18 and step 19: After the UDM+HSS receives the update location request, if the first indication information is present, one of the following may be performed:
1: the UDM+HSS may not trigger step 19, that is, not trigger deregistration; and
2: the UDM+HSS still triggers step 19, and the UDM sends a deregistration notification (such as Nudm_UECM_DeregistrationNotification, where the notification may include the first information) to the AMF, where the deregistration notification may indicate the AMF to deactivate the first terminal policy association in the 5G network and retain the terminal policy information (such as a UE policy context).

Step 20: After the AMF receives the deregistration notification, the AMF triggers the AM-PCF to deactivate the first terminal policy association in the 5G network. In this way, the AM-PCF learns that the first terminal policy association in the 5G network has been deactivated; or the first terminal policy association is released.

Step 21: The UDM+HSS sends an update location ACK (update location ACK) to the MME.

Step 22: The MME sends URSP rules to the UE through a TAU Accept (TAU Accept).

### Embodiment 2 of the present invention:

In this embodiment of this application, the terminal is in an idle state (idle state), and the terminal re-accesses the 5G network from the 4G network, and the N26 interface is supported between the AMF in the 5G network and the MME in the 4G network, so that signaling can be exchanged.

In this embodiment of this application, after re-accessing the 5G network from the 4G network, the terminal needs to perform registration and re-select an AMF and an AM-PCF, which may involve a problem of establishing a new terminal policy association. In this way, there is a conflict with the terminal policy association in the original 4G to some extent. This embodiment of the application can resolve the above problem.

Refer to FIG. 16. The method for processing a terminal policy association in this embodiment of this application includes:
Step 1: The UE triggers a registration procedure (Registration trigger).
Step 2: The UE sends a registration request (Registration request) to an NG-RAN (a 5G base station).
Step 3: The NG-RAN selects an AMF. In this case, the selected AMF may be referred to as an initial AMF. The initial AMF may be the same as or different from an AMF serving the terminal to provide URSP rules for the terminal under the 4G network.
Step 4: The NG-RAN sends a registration request to the initial AMF.
Step 5: The initial AMF sends a context request (context request) to the MME.
Step 6: The MME sends a context response (context response) to the initial AMF, where the context response carries the first information, and the first information includes at least one of the following: index information of the AM-PCF, index information of the AMF, a UE policy association ID, and a terminal identifier, where the terminal identifier may be, for example, a UE subscription permanent identifier (Subscription Permanent Identifier, SUPI). The index information of the AM-PCF includes at least one of the following: an AM-PCF ID, an AM-PCF IP address, and an AM-PCF FQDN (fully qualified domain name).
   Because in this case, the UE selects one AMF under the 5G network, regardless of whether this AMF is the same as or different from the original AMF of the UE in the 5G network, it is necessary to perform AM-PCF selection and terminal policy association establishment (UE policy association establishment) for the UE.
Step 7: Security process.
Step 8: The initial AMF sends a context acknowledgment (context ACK) to the MME.
Step 9 and step 10: The AMF requests an ID from the UE; and the AMF registers to the UDM.
Step 11 to Step 14: Establish a new UE policy association and modify or release or deactivate the old UE policy association. The following provides description in detail.

In step 11 to step 14, the initial AMF performs different operations, depending on the old AMF (the original AMF of the UE in 5G), the new AM-PCF (the newly selected AMF), and the old AM-PCF (the original AM-PCF of the UE in 5G), which is described by using examples below.

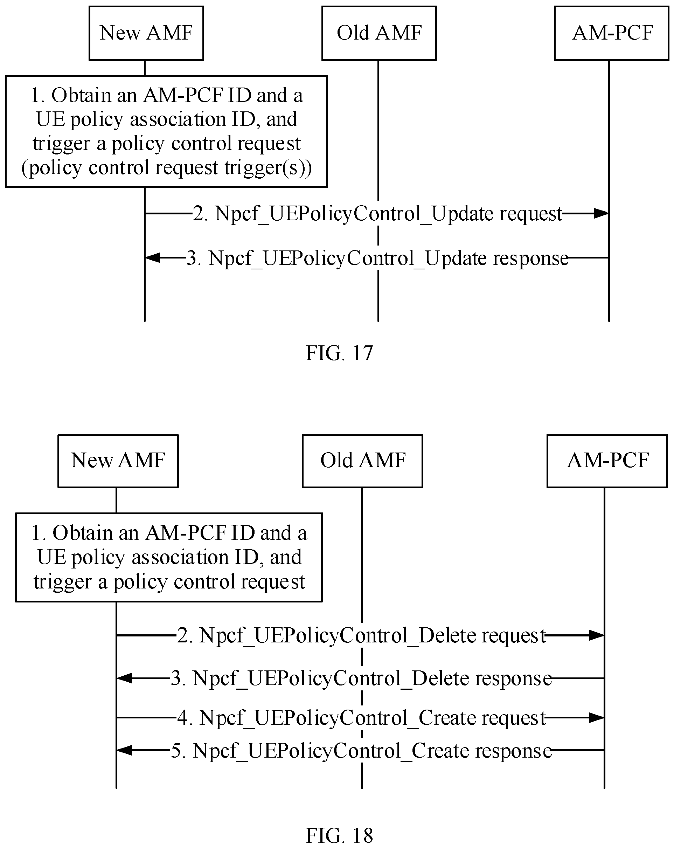

Method 1: Refer to FIG. 17 (the AMF is changed and the AM-PCF remains unchanged). If the new AMF after the UE re-accesses the 5G network is different from the old AMF in the 5G network, and the newly selected AM-PCF is the same as the old AM-PCF in the 5G network, then the new AMF may trigger the AM-PCF based on the obtained first information to modify the terminal policy association (through Npcf_UEPolicyControl_Update request) to change the old AMP to the new AMF; and also triggers the AM-PCF to release or deactivate the terminal policy association with the SM-PCF.

Method 2: Refer to FIG. 18 (the AMF is changed and the AM-PCF remains unchanged). The new AMF triggers a terminal policy association termination request (UE policy association termination) (through Npcf_UEPolicyControl_Delete request) to the AM-PCF. The terminal policy association termination request carries information such as an association ID and a UE SUPI, that is, the new AMF requests the AM-PCF to release the original terminal policy association in the 5G network first. After the release, the new AMF triggers a terminal policy association establishment request (UE policy association establishment) to the AM-PCF (through Npcf_UEPolicyControl_Create request) to establish a new terminal policy association. In addition, the AM-PCF is triggered to release or deactivate the terminal policy association with the SM-PCF in the 4G network.

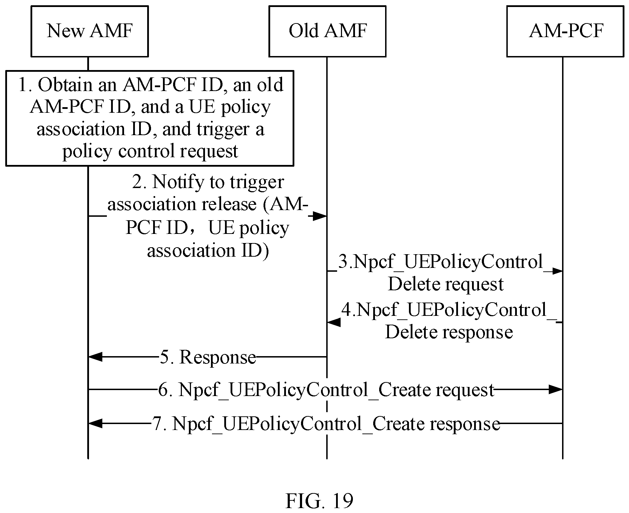

Method 3: Refer to FIG. 19 (the AMF is changed and the AM-PCF remains unchanged). The new AMF informs the old AMF serving the UE in 4G to trigger a terminal policy association termination request (UE policy association termination), so as to release the original terminal policy association of the terminal in 5G. After the original terminal policy association of the terminal in 5G is released, the new AMF triggers the AM-PCF to establish a new terminal policy association (through Npcf_UEPolicyControl_Create request). In addition, the AM-PCF is triggered to release or deactivate the terminal policy association with the SM-PCF in the 4G network.

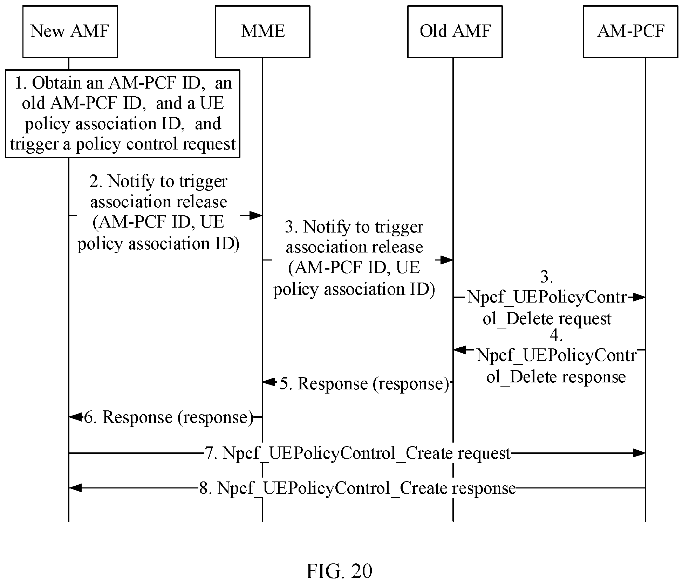

Method 4: Refer to FIG. 20 (the AMF is changed and the AM-PCF remains unchanged). The new AMF triggers a request to the MME to indicate the MME, and then the MME indicates the old AMF to trigger release of the original terminal policy association of the terminal in 5G. After the original terminal policy association of the terminal in 5G is released, the new AMF triggers the AM-PCF to establish a new terminal policy association (through Npcf_UEPolicyControl_Create request). In addition, the AM-PCF is triggered to release or deactivate the terminal policy association with the SM-PCF in the 4G network.

Method 5: The new AMF triggers the AM-PCF to establish a new terminal policy association, so that the UE simultaneously maintains three terminal policy associations in the same AM-PCF:
(1) first terminal policy association, that is, an original association between the old AMF and the AM-PCF of the UE in the 5G network;
(2) second terminal policy association, that is, an association between the SM-PCF and the AM-PCF of the UE in 4G; and
(3) third terminal policy association, that is, an association between the new AMF and the AM-PCF of the UE in the 5G network.

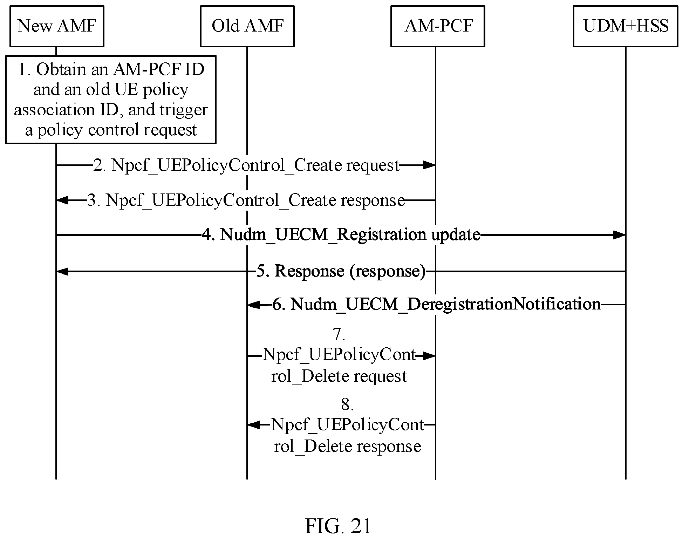

Method 5-1: In an embodiment, refer to FIG. 21 (the AMF is changed and the AM-PCF remains unchanged). After the AM-PCF establishes a third terminal policy association in the 5G network for the UE, there are three associations, and an association with the SM-PCF (second terminal policy association) is released or deactivated.

However, the first terminal policy association is handled as follows: the new AMF triggers a registration request to the UDM+HSS (such as Nudm_UECM_Registration update) (step 4). After registration, the UDM+HSS triggers a deregistration notification (such as Nudm_UECM_DeregistrationNotification) to the old AMF (step 6), and the old AMF triggers UE policy association termination (Npcf_UEPolicyControl_Delete) to the AM-PCF according to the deregistration notification to release the first terminal policy association (steps 7 and 8).

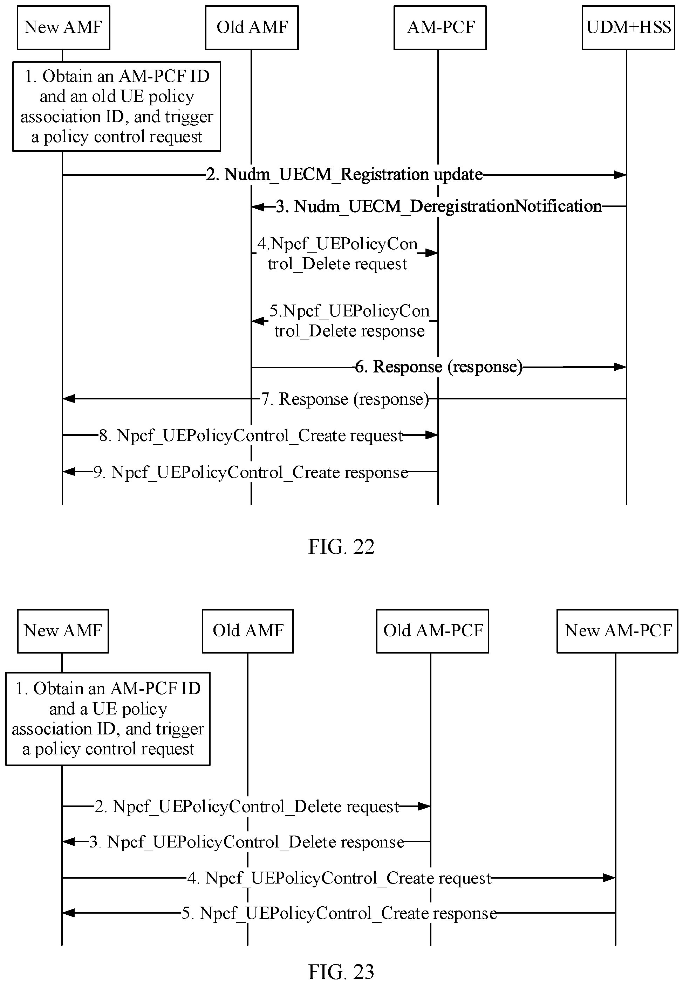

Method 5-2: In an embodiment, refer to FIG. 22 (the AMF is changed and the AM-PCF remains unchanged). After the new AMF is registered with the UDM+HSS, the UDM+HSS triggers the old AMF to release the first terminal policy association (step 3). After the first terminal policy association is released, the UDM+HSS informs the new AMF to establish a third terminal policy association for the UE. The new AMF triggers the AM-PCF to release or deactivate the terminal policy association with the SM-PCF in the 4G network (steps 8 and 9).

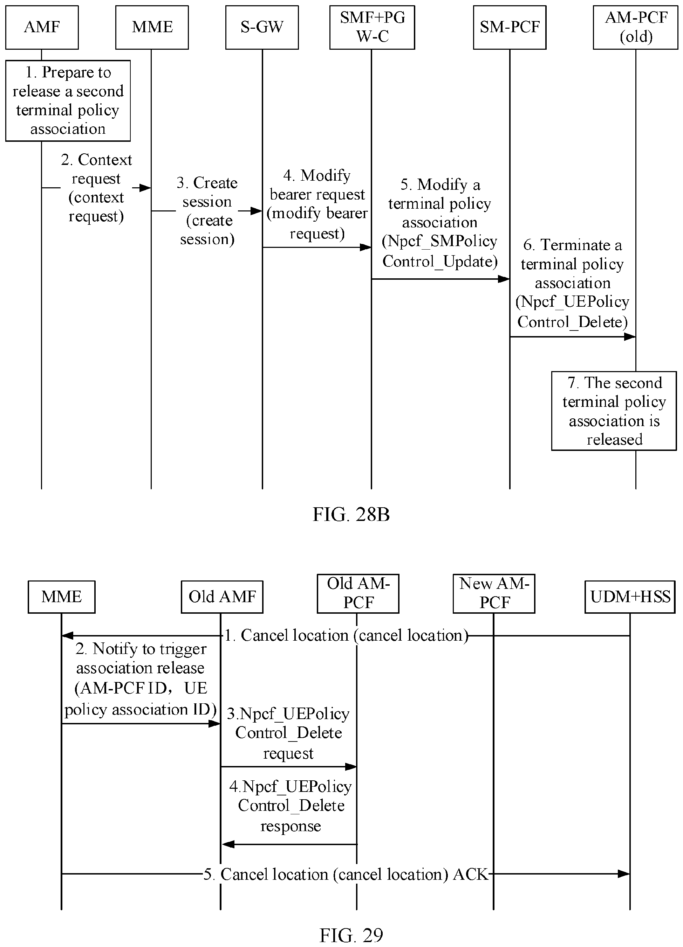

Method 5-3: Refer to FIG. 28B (the AMF is changed and the AM-PCF remains unchanged). In an embodiment, the AMF informs the SM-PCF to release or deactivate the second terminal policy association with the AM-PCF for the terminal, and then the AMF triggers to establish a new third terminal policy association to the AM-PCF. That is, the AMF triggers the SM-PCF to execute the method, where a signaling relationship is shown in FIG. 28B. The AMF can directly indicate the SM-PCF to perform terminal policy association termination, and the information such as the ID and IP address of the SM-PCF is provided by the MME. Alternatively, the AMF may indicate the SM-PCF to perform terminal policy association termination through a path of the MME, the S-GW, the SMF+PGW-C, and the SM-PCF.

For example, the AMF sends a context request (context request) to the MME, where the context request contains an indication, indicating to deactivate or release the second terminal policy association, and the context request further includes index information of the AM-PCF (such as an AM-PCF ID or an AM-PCF IP address) and a second terminal policy association ID (that is, a UE policy association ID) and/or UE SUPI. After receiving the context request, the MME triggers a create session request (create session request) to the S-GW, and the above information (the indication, the index information of the AM-PCF, or the like) is also included in the create session request. The S-GW triggers a modify bearer request (modify bearer request) to the SMF+PGW-C, where the modify bearer request further includes the above information (the indication, the index information of the AM-PCF, or the like). Then, the SMF+PGW-C triggers a session policy association modification request SM policy association modification (Npcf_SMPolicyControl_Update) to the SM-PCF, and the session policy association modification request also contains the indication information and the index information of AM-PCF, that is, indicating the SM-PCF to deactivate or release the second terminal policy association. Finally, the SM-PCF triggers association deactivation or release: for example, releasing the second terminal policy association through a terminal policy association termination request UE policy association termination (Npcf_UEPolicyControl_Delete), or triggering a terminal policy modification request UE policy association modification (Npcf_UEPolicyControl _Update) to modify the second terminal policy association.

In the above several embodiments, the AM-PCF remains unchanged after the terminal re-accesses the 5G network. The following describes the method for processing a terminal policy association in a case that the AM-PCF is changed after the terminal re-accesses the 5G network. The AMF may obtain a terminal policy association ID (the terminal policy association ID is sent by the SM-PCF to the SMF+PGW-C, the SMF+PGW-C sends it to the S-GW, the S-GW sends it to the MME, and finally the MME sends it to the new AMF) of the terminal under the 4G network. That is, the AMF triggers the old AM-PCF to release the terminal policy association of the terminal under the 4G network in the following process, which is indicated based on a policy association ID sent by the SM-PCF.

Method 1: Refer to FIG. 23 (the AMF is changed and the AM-PCF is changed). The new AMF triggers a terminal policy association termination request (UE policy association termination) (through Npcf_UEPolicyControl_Delete request) to the old AM-PC (steps 2 and 3) to release the first terminal policy association and the second terminal policy association. After the first terminal policy association and the second terminal policy association are released, the new AMF triggers a UE policy association create to the new AM-PCF (through Npcf_UEPolicyControl_Update request) to establish a third terminal policy association (steps 4 and 5).

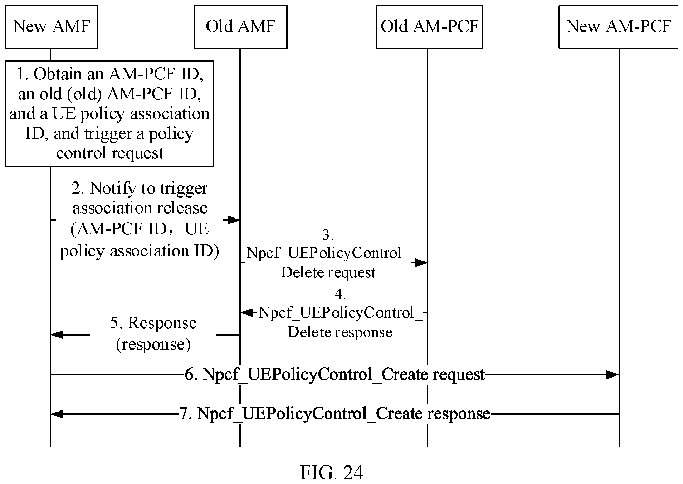

Method 2: Refer to FIG. 24 (the AMF is changed and the AM-PCF is changed). The new AMF first indicates the old AMF to trigger a terminal policy association termination (UE policy association termination) (through Npcf_UEPolicyControl_Delete request) to the old AM-PCF (Step 2). The terminal policy association termination carries information such as an association ID and a UE SUPI, that is, the new AMF requests the old AMF, and then the old AMF requests the old AM-PCF to release the first terminal policy association; and after the old AM-PCF releases the first terminal policy association, the old AM-PCF releases the second terminal policy association or deactivates the second terminal policy association. Then, the new AMF triggers UE policy association establishment to the new AM-PCF (through Npcf_ UEPolicyControl_Create request) to establish a third terminal policy association (steps 6 and 7).

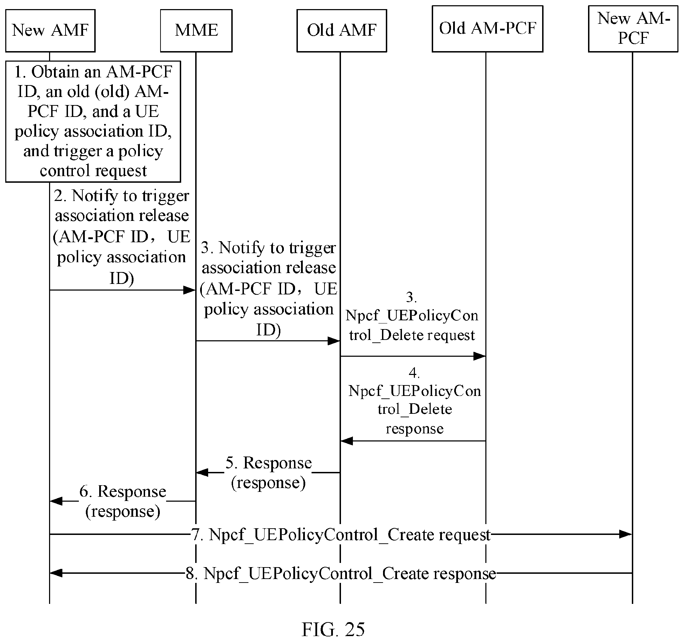

Method 3: Refer to FIG. 25 (the AMF is changed and the AM-PCF is changed). The new AMF triggers a request to the MME, indicating that the MME supports the old AMF to trigger release of the first terminal policy association. After completion, the new AMF triggers the new AM-PCF to establish a UE policy association to the new AM-PCF to establish a third terminal policy association, and then triggers the old AM-PCF to deactivate or release the second terminal policy association (after step 8, not shown).

Method 4: The new AMF triggers to establish a new UE policy association (Third Terminal Policy Association) to the new AM-PCF, so that the UE maintains three terminal policy associations in two AM-PCFs, namely:
(1) first terminal policy association, that is, an original association between the old AMF and the AM-PCF of the UE in the 5G network;
(2) second terminal policy association, that is, an association between the SM-PCF and the AM-PCF of the UE in 4G; and
(3) third terminal policy association, that is, an association between the new AMF and the AM-PCF of the UE in the 5G network.

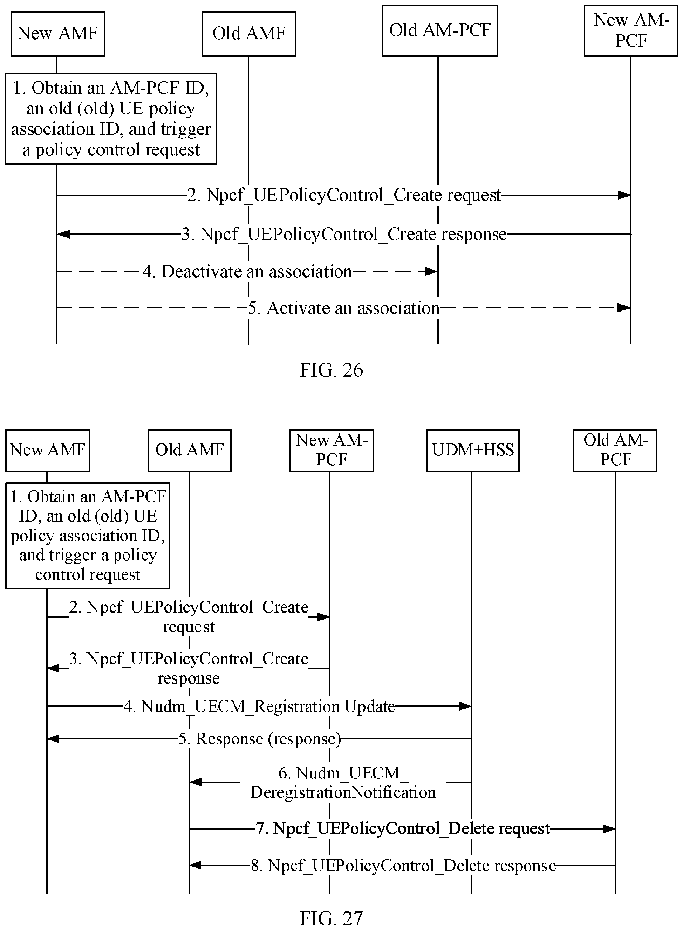

Method 4-1: Refer to FIG. 26 (the AMF is changed and the AM-PCF is changed). In an embodiment, the first terminal policy association is released; the second terminal policy association is designed to be inactive (inactive), and the third terminal policy association is designed to be active (active).

Method 4-2: Refer to FIG. 27 (the AMF is changed and the AM-PCF is changed). In an embodiment, after the new AMF triggers the new AM-PCF to establish the third terminal policy association for the UE (steps 2 and 3), the new AMF triggers a registration request (such as Nudm_UECM_Registration) to the UDM+HSS (steps 4 and 5). After the registration, the UDM+HSS triggers a deregistration notification (such as Nudm_UECM_DeregistrationNotification) to the old AMF, and the old AMF triggers a UE policy association termination (Npcf_UEPolicyControl_Delete) to the old AM-PCF according to the deregistration notification, so as to release the first terminal policy association and the second terminal policy association.

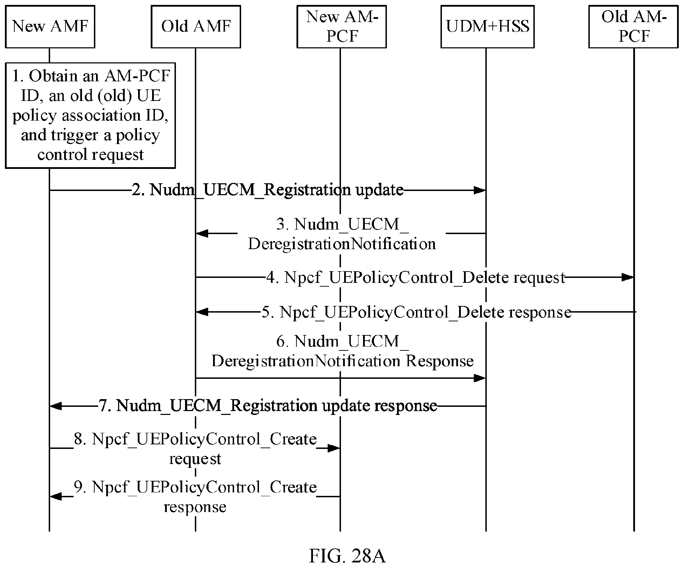

Method 4-3: Refer to FIG. 28 (the AMF is changed and the AM-PCF is changed). In an embodiment, after the new AMF is registered with the UDM+HSS, the UDM+HSS triggers the old AMF to release the first terminal policy association; and after the first terminal policy association is released, the new AMF triggers the new AMF to establish a third terminal policy association for the UE.

Method 4-4: Refer to FIG. 28B (the AMF is changed and the AM-PCF is changed). In an embodiment, the AMF informs the SM-PCF to release or deactivate the second terminal policy association of the old AM-PCF for the terminal, and then the AMF triggers to establish a new third terminal policy association to the new AM-PCF. That is, the AMF triggers the SM-PCF to execute the method, where a signaling relationship is shown in FIG. 28B. The AMF directly indicates the SM-PCF to perform terminal policy association termination, and the information such as the ID and IP address of the SM-PCF is provided by the MME. Alternatively, the AMF may indicate the SM-PCF to perform terminal policy association termination through a path of the MME, the S-GW, the SMF+PGW-C, and the SM-PCF.

For example, the AMF sends a context request (context request) to the MME, where the context request contains an indication, indicating to deactivate or release the second terminal policy association, and the context request further includes index information of the AM-PCF (such as an AM-PCF ID or an AM-PCF IP address) and a second terminal policy association ID (that is, a UE policy association ID) and/or UE SUPI. After receiving the context request, the MME triggers a create session request (create session request) to the S-GW, and the above information (the indication, the index information of the AM-PCF, or the like) is also included in the create session request. The S-GW triggers a modify bearer request (modify bearer request) to the SMF+PGW-C, where the modify bearer request further includes the above information (the indication, the index information of the AM-PCF, or the like). Then, the SMF+PGW-C triggers a session policy association modification request SM policy association modification (Npcf_SMPolicyControl _Update) to the SM-PCF, and the session policy association modification request also contains the indication information and the index information of AM-PCF, that is, indicating the SM-PCF to deactivate or release the second terminal policy association. Finally, the SM-PCF triggers association deactivation or release: for example, releasing the second terminal policy association through a terminal policy association termination request UE policy association termination (Npcf_UEPolicyControl_Delete), or triggering a terminal policy modification request UE policy association modification (Npcf_UEPolicyControl _Update) to modify the second terminal policy association.

Step 15: The UDM+HSS may send a cancel location (cancel location) to the MME or the initial AMF, and the MME or the initial AMF may trigger the old AMF to release the first terminal policy association (which is sent to the initial AMF in FIG. 16).

Refer to FIG. 29. In this embodiment, the UDM+HSS sends a cancel location (cancel location) to the MME, and the MME triggers the old AMF to release the first terminal policy association.

Step 16: The initial AMF sends a cancel location ack to the UDM+HSS.

Step 17: The initial AMF sends a registration accept (registration Accept) to the UE.

Step 18: The UE sends a registration complete (registration complete) to the initial AMF.

### Embodiment 3 of the present invention:

In this embodiment of this application, the terminal accesses the 4G network from the 5G network, and the N26 interface is not supported between the AMF in the 5G network and the MME in the 4G network, so that signaling cannot be exchanged.

In this embodiment of this application, the terminal performs single registration, and the so-called single registration means that the terminal is allowed to be registered with either the 4G network or the 5G network. In a case of registration with the 4G network, information related to the registration of the 5G network may be released, and the AMF cannot update URSP rules to the UE through a 5G NAS message.

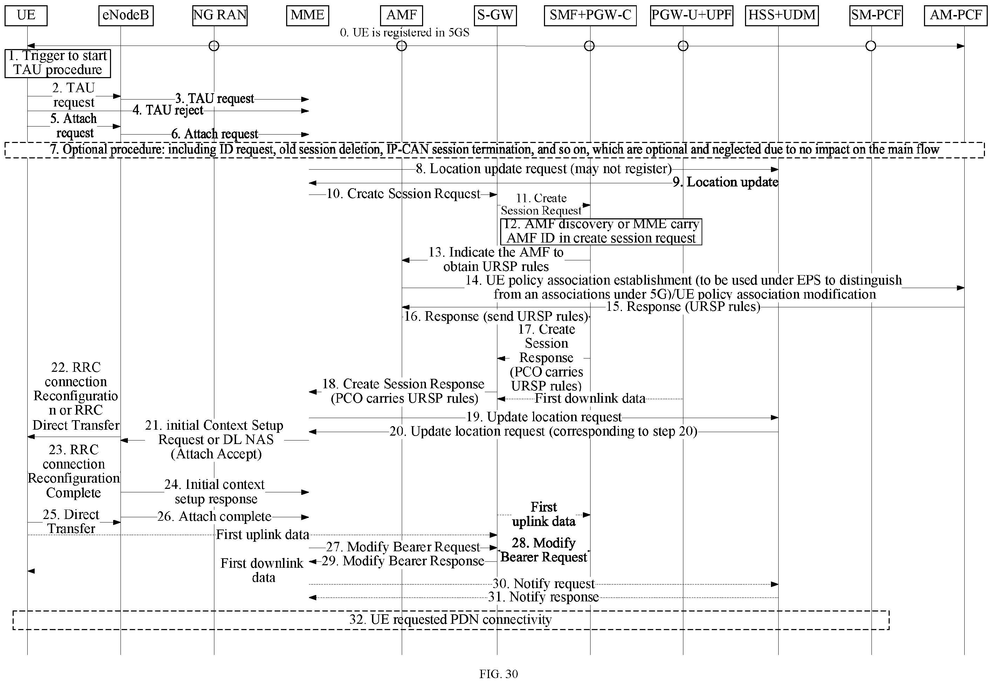

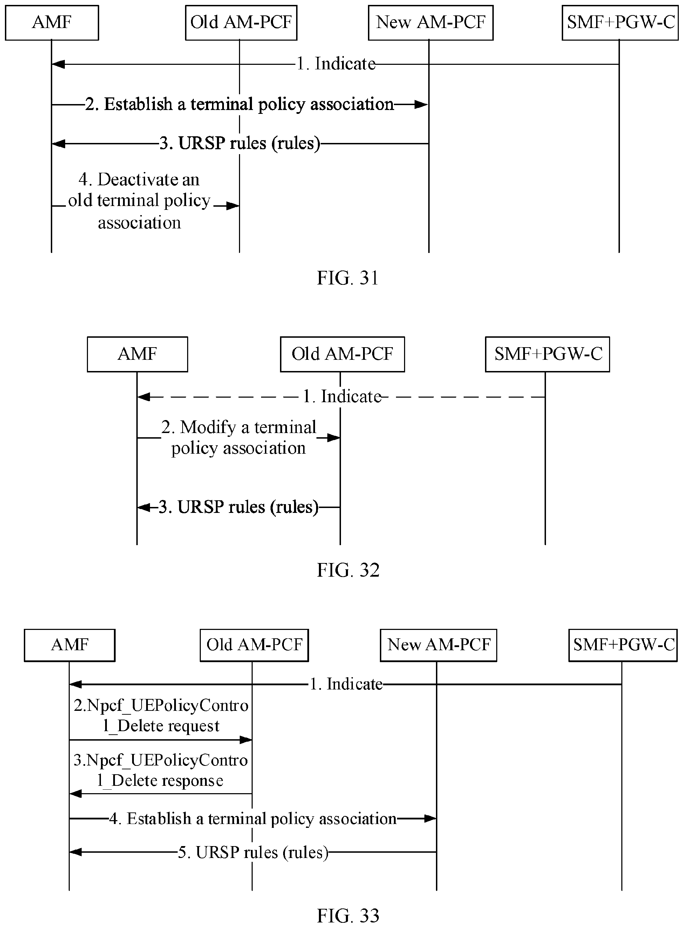

Refer to FIG. 30. The method for processing a terminal policy association in this embodiment of this application includes:
Step 1: The UE triggers a TAU procedure.
Step 2: The UE sends a TAU request (TAU request) to the eNodeB (4G base station).
Step 3: The eNodeB sends a TAU request to the MME.
Step 4: The MME sends a TAU reject (TAU reject) to the UE.
Step 5: The UE sends an attach request to the eNodeB, where the attach request (attach request) carries: a capability indication that the terminal supports receiving URSP rules under the 4G network; and indication information that the terminal requests to obtain URSP rules.
Step 6: The eNodeB sends an attach request to the MME, where the attach request carries: a capability indication that the terminal supports receiving URSP rules under the 4G network; and indication information that the terminal requests to obtain URSP rules.
Step 7: This step is optional and is not described in detail.
Step 8: The MME triggers an update location request (location update request) to the UDM+HSS, where the update location request includes a UE SUPI and one first indication information for indicating one of the following:
   indicating the UDM+HSS not to deregister the UE, that is, not sending Nudm_UECM_DeregistrationNotification to the AMF; and
   indicating the UDM+HSS to send Nudm_UECM_DeregistrationNotification to the AMF, but indicating the AMF not to release a UE policy association, that is, indicating the AMF not to perform Npcf_UEPolicyControl_Delete; or indicating the AMF not to trigger UE policy association release, or make the AMF indicate the AM-PCF not to release a UE policy context (UE policy context); or indicating the AMF not to release the UE context, and the terminal context includes a UE policy context.
Step 9: The UDM+HSS sends a location update to the MME.
Step 10: The MME sends a create session request (create session request) to the serving gateway (Serving Gateway, S-GW), where the session request includes indication information for obtaining the URSP rules of the UE.
Step 11: The S-GW sends a create session request (create session request) to the SMF+PGW-C (denoted as an SMF, a PGW-C, or a communication device integrating the SMF and the PGW-C), where the create session request includes indication information for obtaining the URSP rules of the UE.
Step 12: After receiving the create session request, the SMF+PGW-C triggers the AMF according to the indication information in the session establishment request to search for or obtain from the binding support function (Binding Support Function, BSF) information such as an ID or IP address of the AM-PCF serving the terminal. Alternatively, the first information may be obtained from the UDM. Because the MME and the AMF cannot perform interaction directly when the N26 interface is not supported, the first information may be obtained through the UDM+HSS.
Step 13: The SMF+PGW-C sends a first request to the AMF, requesting to obtain the URSP rules of the UE.
Step 14 and step 15: The AMF obtains URSP rules, which specifically includes several scenarios:
   Case 1 (refer to FIG. 31):
   Step 14: The SMF+PGW-C indicates the AMF to trigger the AM-PCF to establish a new UE policy association (a second terminal policy association) for the UE under 4G. The AM-PCF may be the same as or different from the AM-PCF under 5G. Then, the AMF triggers the AM-PCF to establish a second terminal policy association and deactivate the first terminal policy association (the terminal policy association in 5G).
   Step 15: The AM-PCF sends the URSP rules to the AMF.
Case 2 (refer to FIG. 32):
   Step 14: The SMF+PGW-C indicates the AMF to trigger the AM-PCF to modify the first terminal policy association (policy association modification), which is applicable to a case that a same AM-PCF is used in 4G and 5G.
   Step 15: The AM-PCF sends the URSP rules to the AMF.
Case 3 (refer to FIG. 33):
   Step 14: The SMF+PGW-C indicates the AMF to trigger the AM-PCF to release the first terminal policy association (UE policy association termination), and then the AMF establishes a new UE policy association (second terminal policy association) to the new AM-PCF to obtain URSP rules.
   Step 15: The new AM-PCF sends the URSP rules to the AMF.
   Step 16: The AMF sends the URSP rules to the SMF+PGW-C.
   Step 17: The SMF+PGW-C sends the URSP rules to the S-GW through a PCO.
   Step 18: The S-GW sends the URSP rules to the MME.
   Step 19: The MME sends an update location request (update location request) to the UDM+HSS, where the update location request includes first indication information newly added, for indicating one of the following:
      not sending a deregistration notification (such as Nudm_UECM_DeregistrationNotification) to the old first communication device; and
      sending a deregistration notification to the old first communication device, where the deregistration notification is used for indicating at least one of the following: retaining or releasing or deactivating a first terminal policy association, and retaining terminal policy information.
   Step 20: After the UDM+HSS receives the update location request, if the first indication information is present, one of the following is performed:
      Method 1: The UDM triggers a deregistration notification (such as Nudm_UECM_DeregistrationNotification) to the AMF, where the deregistration notification also needs to carry this indication, so that the AMF may not trigger UE policy association termination (that is, Npcf_UEPolicyControl_Delete) after receiving the deregistration notification.
      The deregistration notification may further include first information, where the first information may include: a UE policy association ID or a SUPI (used to identify which association of which UE not to be released).
   Method 2: After detecting this indication, the UDM does not trigger a deregistration notification (Nudm_UECM_DeregistrationNotification).

The AMF receives a deregistration notification from the UDM. If the deregistration notification contains the first indication information, the AMF does not perform UE policy association termination, so that the terminal policy association is retained. In this way, the AM-PCF always provides URSP rules for the UE.

### Embodiment 4 of the present invention:

In this embodiment of this application, the terminal accesses the 4G network from the 5G network, and the N26 interface is not supported between the AMF in the 5G network and the MME in the 4G network, so that signaling cannot be exchanged.

In this embodiment of this application, the terminal performs single registration, and the so-called single registration means that the terminal is allowed to be registered with either the 4G network or the 5G network. In a case of registration with the 4G network, information related to the registration of the 5G network may be released, and the AMF cannot update URSP rules to the UE through a 5G NAS message.

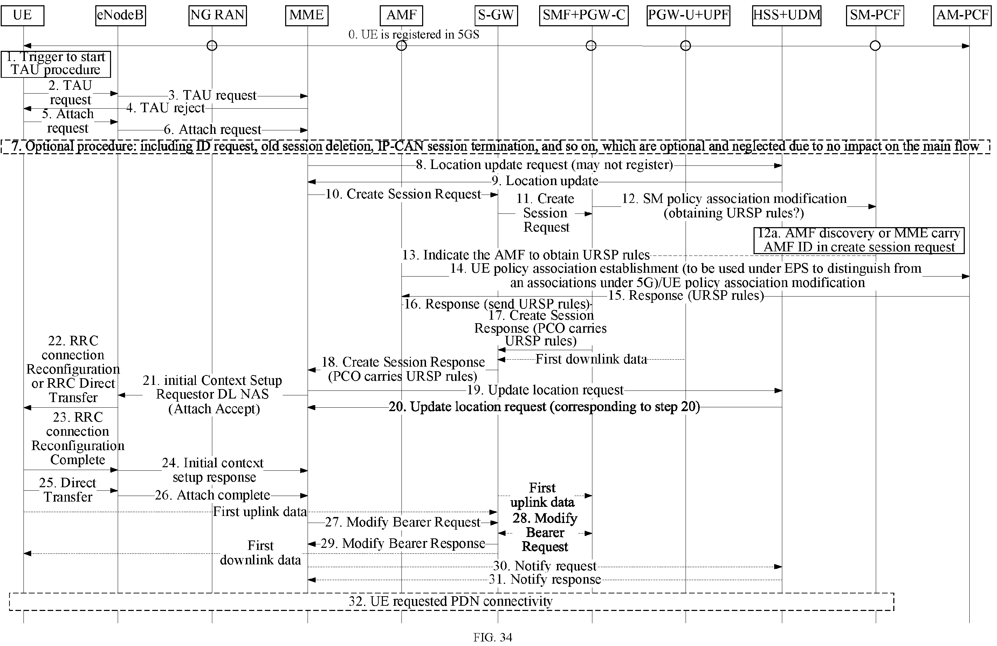

Refer to FIG. 34. A difference between the method for processing a terminal policy association in this embodiment of this application and the method in embodiment 3 lies in that:

Step 12 and step 12a: After the SMF+PGW-C triggers SM policy association modification to the SM-PCF, the SM-PCF is responsible for finding one AMF, and then triggers the AMF to obtain URSP rules.

Embodiment 6 of the present invention: trigger conditions for updating URSP rules

In this embodiment of this application, the triggering conditions for updating URSP rules may include at least one of the following:
receiving a context request sent by a second communication device, where the context request includes at least one of the following: a capability indication that the terminal supports receiving terminal policy information under the second network; and indication information that the terminal requests to obtain terminal policy information;
receiving a terminal policy acquisition request sent by the second communication device, where the terminal policy acquisition request is used for obtaining terminal policy information for the terminal;
receiving a tracking area update or attach request of the terminal; and
detecting that the terminal accesses the second network from the first network.

Refer to the example shown in Table 3 below:

**Table 3 Policy control request triggers related to the AMF/MME and 3GPP access types**

| Policy control request trigger (Policy Control Request Trigger) | Description (Description) | Condition for reporting (Condition for reporting) |
|---|---|---|
| Location change (Location change) (tracking area) | The tracking area of the UE has changed. (The tracking area of the UE has changed.) | PCF (AM Policy, UE Policy) |
| Change of UE presence in presence reporting area (Change of UE presence in Presence Reporting Area) | The UE is entering/leaving a presence reporting area. (The UE is entering/leaving a Presence Reporting Area.) | PCF (AM Policy, UE Policy) |
| PLMN change (PLMN change) | The UE has moved to another operators' domain. (The UE has moved to another operators' domain.) | PCF (UE Policy) |
| Connectivity state changes | The connectivity state of UE is changed. | PCF (UE Policy) |
| Evolved packet system interworking (EPS interworking) | Interworking between the UE and the EPS requires URSP rules; and a context request is received from the MME. | PCF (UE Policy) |
| The UE performs TAU or attach in the 4G network | After accessing the 4G coverage, the terminal performs TAU or attach, and then triggers pushing or updating URSP rules. | PCF (UE Policy) |

The above embodiments describe the following issues:
First, a method for sending URSP rules for the terminal in a case with the N26 interface being supported or not supported is described. In the above embodiments, messages such as TAU accept or handover command (handover command) need to be extended to carry URSP rules.
Second, the terminal may establish a UE policy association (terminal policy association) to different AM-PCFs to obtain URSP rules under the 4G network. Therefore, it needs to be considered that an AM-PCF is needed to provide URSP rules for the 4G network. In addition, after the terminal returns from the 4G network to the 5G network, if the terminal finds another AMF and AM-PCF under the 5G system (5G System, 5GS), there may be multiple UE policy associations. In this case, it is necessary to consider triggering release or deactivation of old UE policy associations.
Finally, in a case with the N26 interface being not supported, the SMF+PGW-C (expressed as an SMF, or a PGW-C, or a communication device integrating the SMF and the PGW-C), or an SM-PCF (session management PCF) is considered to trigger the method of finding an AMF and then obtaining URSP rules.

For the method for processing a terminal policy association provided in this embodiment of this application, the execution subject may be an apparatus for processing a terminal policy association. In the embodiments of this application, the apparatus for processing a terminal policy association provided in the embodiments of this application is described by using the method for processing a terminal policy association being executed by the apparatus for processing a terminal policy association as an example.

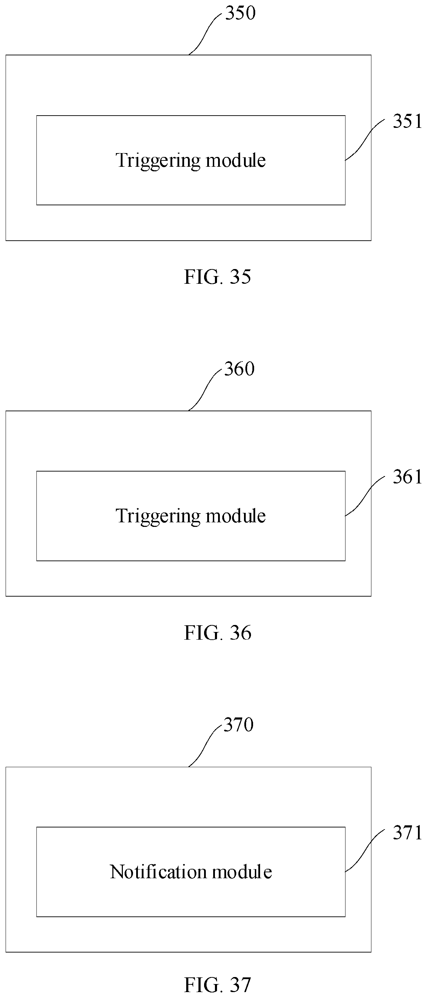

Refer to FIG. 35. An embodiment of this application further provides an apparatus 350 for processing a terminal policy association, which includes:
a triggering module 351, configured to trigger a first operation after a terminal re-accesses a first network from a second network, where the first operation includes one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; where
the first terminal policy association and the third terminal policy association are used for obtaining terminal policy information by the terminal in the first network;
the second terminal policy association is used for obtaining terminal policy information by the terminal in the second network; and
the first network and the second network use different radio access technologies.

According to this embodiment of this application, in the processing method in which a terminal policy association is provided for the terminal re-accessing the first network from the second network, the terminal can still obtain terminal policy information based on the terminal policy association provided by the network side after re-accessing the first network from the second network.

Optionally, the triggering module 351 is configured to obtain first information; and trigger the first operation based on the first information;
the first information includes at least one of the following:
index information of an old first communication device;
index information of an old third communication device;
an identifier ID of the first terminal policy association; and
a terminal identifier; where
the old first communication device and the old third communication device are communication devices that maintain a terminal policy association for the terminal in the first network before the terminal accesses the second network.

Optionally, the index information of the old first communication device includes at least one of the following: a first communication device ID and a first communication device address; and/or, the index information of the old third communication device includes at least one of the following: a third communication device ID and a third communication device address.

Optionally, the triggering module 351 is configured to receive the first information sent by a second communication device or a fourth communication device or the old first communication device; where
the second communication device is located in the second network;
the fourth communication device provides unified data management services for both the first network and the second network; and
the old first communication device maintains a terminal context, and the terminal context includes the first information.

Optionally, the triggering a first operation includes at least one of the following:
in a case of determining based on the first information that the first communication device remains unchanged and a third communication device remains unchanged after the terminal re-accesses the first network from the second network, triggering the first operation, where the first operation includes one of the following: modifying the second terminal policy association; activating the first terminal policy association, and releasing or deactivating the second terminal policy association; creating a third terminal policy association, releasing the first terminal policy association, and releasing or deactivating the second terminal policy association; and creating a third terminal policy association, and releasing or deactivating the second terminal policy association;
in a case of determining based on the first information that the first communication device remains unchanged and the third communication device is changed after the terminal re-accesses the first network from the second network, triggering the first operation, where the first operation includes one of the following: creating a third terminal policy association, releasing the first terminal policy association, and releasing or deactivating the second terminal policy association; and creating a third terminal policy association, and releasing or deactivating the second terminal policy association.
in a case of determining based on the first information that the first communication device is changed and the third communication device remains unchanged after the terminal re-accesses the first network from the second network, triggering the first operation, where the first operation includes one of the following: activating and modifying the first terminal policy association, and releasing or deactivating the second terminal policy association; modifying the second terminal policy association; creating a third terminal policy association, releasing the first terminal policy association, and releasing or deactivating the second terminal policy association; and creating a third terminal policy association, and releasing or deactivating the second terminal policy association; and
in a case of determining based on the first information that the first communication device is changed and the third communication device is changed after the terminal re-accesses the first network from the second network, triggering the first operation, where the first operation includes one of the following: creating a third terminal policy association, releasing the first terminal policy association, and releasing or deactivating the second terminal policy association; and creating a third terminal policy association, and releasing or deactivating the second terminal policy association.

Optionally, in a case of determining based on the first information that the first communication device remains unchanged and the third communication device remains unchanged after the terminal re-accesses the first network from the second network, the triggering the first operation includes: triggering the third communication device to perform one of the following:
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association.
   and/or
in a case of determining based on the first information that the first communication device remains unchanged and the third communication device is changed after the terminal re-accesses the first network from the second network, that the first communication device triggers the first operation includes one of the following:
   triggering the old third communication device to release the first terminal policy association and release or deactivate the second terminal policy association; and triggering the newly selected third communication device to create a new third terminal policy association; and
   triggering the old third communication device to release or deactivate the second terminal policy association; and triggering a newly selected third communication device to create a new third terminal policy association;
      and/or
   in a case of determining based on the first information that the first communication device is changed and the third communication device remains unchanged after the terminal re-accesses the first network from the second network, the triggering the first operation includes one of the following:
      triggering the third communication device to activate and modify the first terminal policy association, and release or deactivate the second terminal policy association;
      triggering the third communication device to modify the second terminal policy association;
      triggering the third communication device to release the first terminal policy association, create a third terminal policy association, and release or deactivate the second terminal policy association;
      indicating the old first communication device to trigger the third communication device to release the first terminal policy association; and triggering the third communication device to create a new third terminal policy association, and release or deactivate the second terminal policy association;
      indicating the second communication device to inform the old first communication device to trigger the third communication device to release the first terminal policy association; and triggering the third communication device to create a new third terminal policy association, and release or deactivate the second terminal policy association;
      triggering the third communication device to create a new third terminal policy association, and release or deactivate the second terminal policy association; sending a registration request to a fourth communication device, where the registration request is used for indicating the fourth communication device to send a deregistration notification to the old first communication device, and the deregistration notification is used for indicating the old first communication device to trigger the third communication device to release the first terminal policy association;
      triggering the third communication device to create a new third terminal policy association and release or deactivate the second terminal policy association, after a registration response sent by the fourth communication device is received, where the registration response is sent after the fourth communication device learns that the old first communication device releases the first terminal policy association;
      triggering the third communication device to create a new third terminal policy association, and release or deactivate the second terminal policy association;
      indicating a seventh communication device to release or deactivate the second terminal policy association, and triggering the third communication device to activate and modify the first terminal policy association;
      indicating the seventh communication device to release or deactivate the second terminal policy association, and triggering the third communication device to release the first terminal policy association and create a new third terminal policy association; and
      indicating the seventh communication device to release or deactivate the second terminal policy association, and triggering the third communication device to create a new third terminal policy association;
         and/or
      in a case of determining based on the first information that the first communication device is changed and the third communication device is changed after the terminal re-accesses the first network from the second network, the triggering the first operation includes one of the following:
         triggering the old third communication device to release the first terminal policy association and release or deactivate the second terminal policy association; and triggering the newly selected third communication device to create a new third terminal policy association; and
         indicating the old first communication device to trigger the old third communication device to release the first terminal policy association and release or deactivate the second terminal policy association; and triggering the newly selected third communication device to create a new third terminal policy association;
         indicating the second communication device to inform the old first communication device to trigger the old third communication device to release the first terminal policy association and release or deactivate the second terminal policy association; and triggering the newly selected third communication device to create a new third terminal policy association;
         triggering the newly selected third communication device to create a new third terminal policy association, and sending a registration request to a fourth communication device, where the registration request is used for indicating the fourth communication device to send a deregistration notification to the old first communication device, and the deregistration notification is used for indicating the old first communication device to trigger the old third communication device to release the first terminal policy association and release or deactivate the second terminal policy association;
         triggering the newly selected third communication device to create a new third terminal policy association after receiving a registration response sent by the fourth communication device, where the registration response is sent after the fourth communication device learns that the old first communication device releases the first terminal policy association and releases or deactivates the second terminal policy association;
         triggering the old third communication device to release or deactivate the second terminal policy association; and triggering a newly selected third communication device to create a new third terminal policy association;
         indicating the old first communication device to trigger the old third communication device to release or deactivate the second terminal policy association; and triggering the newly selected third communication device to create a new third terminal policy association;
         indicating the second communication device to inform the old first communication device to trigger the old third communication device to release or deactivate the second terminal policy association; and triggering the newly selected third communication device to create a new third terminal policy association;
         triggering the newly selected third communication device to create a new third terminal policy association, and sending a registration request to the fourth communication device, where the registration request is used for indicating the fourth communication device to send a deregistration notification to the old first communication device, and the deregistration notification is used for indicating the old first communication device to trigger the old third communication device to release or deactivate the second terminal policy association;
         triggering the newly selected third communication device to create a new third terminal policy association, after receiving a registration response sent by the fourth communication device, where the registration response is sent after the fourth communication device learns that the old first communication device releases or deactivates the second terminal policy association;
         indicating the seventh communication device to release or deactivate the second terminal policy association, triggering the old third communication device to release the first terminal policy association, and triggering the newly selected third communication device to create a new third terminal policy association;
         indicating the seventh communication device to release or deactivate the second terminal policy association, indicating the old first communication device to trigger the old third communication device to release the first terminal policy association, and triggering the newly selected third communication device to create a new third terminal policy association; and
         indicating the seventh communication device to release or deactivate the second terminal policy association, and triggering the newly selected third communication device to create a new third terminal policy association.

The indicating the seventh communication device to release or deactivate the second terminal policy association includes one of the following: the first communication device directly indicates the seventh communication device to release or deactivate the second terminal policy association; and the first communication device indicates the seventh communication device through the second communication device to release or deactivate the second terminal policy association.

The seventh communication device is located in the second network, and the seventh communication device is used to provide session policy services for a terminal in the second network.

The apparatus for processing a terminal policy association in this embodiment of the application may be an electronic device, such as an electronic device with an operating system, or a component in the electronic device, such as an integrated circuit or a chip.

The apparatus for processing a terminal policy association provided in this embodiment of this application can implement the processes implemented in the method embodiment in FIG. 2, with the same technical effects achieved. To avoid repetition, details are not described herein again.

Refer to FIG. 36. An embodiment of this application further provides an apparatus 360 for processing a terminal policy association, including:
a triggering module 361, configured to trigger a second operation after a terminal re-accesses a second network from a first network, where the second operation includes one of the following:
releasing or deactivating a first terminal policy association;
retaining terminal policy information;
establishing a second terminal policy association; and
modifying the first terminal policy association; where
the first terminal policy association is used for obtaining terminal policy information by the terminal in the first network;
the second terminal policy association is used for obtaining terminal policy information by the terminal in the second network; and
the first network and the second network use different radio access technologies.

According to this embodiment of this application, in the processing method in which a terminal policy association is provided for the terminal accessing the second network from the first network, the terminal can still obtain terminal policy information based on the terminal policy association provided by the network side after accessing the second network from the first network.

Optionally, the apparatus 360 for processing a terminal policy association further includes:
a first receiving module, configured to receive a terminal policy acquisition request sent by the second communication device, where the terminal policy acquisition request is used for obtaining terminal policy information for the terminal;
a first sending module, configured to send the terminal policy control acquisition request to a third communication device; and
a second receiving module, configured to receive terminal policy information sent by the third communication device and send it to the second communication device; where
the third communication device is located in the first network; and
the second communication device is located in the second network.

Optionally, the apparatus 360 for processing a terminal policy association further includes:
a second sending module, configured to send first information to a second communication device or a fourth communication device, where the first information includes at least one of the following:
index information of the first communication device;
index information of a third communication device;
an identifier ID of the first terminal policy association; and
a terminal identifier; where
the first information is used for at least one of the following:
   establishing a second terminal policy association or modifying a first terminal policy association; and
   obtaining terminal policy information; where
   the fourth communication device provides unified data management services for both the first network and the second network.

Optionally, the index information of the first communication device includes at least one of the following: a first communication device ID and a first communication device address; and/or, the index information of the third communication device includes at least one of the following: a third communication device ID and a third communication device address.

Optionally, the apparatus 360 for processing a terminal policy association further includes:
a third receiving module, configured to receive a deregistration notification sent by a fourth communication device, where the deregistration notification is used for indicating the first communication device to trigger the second operation; where
the fourth communication device provides unified data management services for both the first network and the second network.

Optionally, the apparatus 360 for processing a terminal policy association further includes:
a fourth receiving module, configured to receive a first request sent by a sixth communication device, where the first request is used for at least one of the following: triggering the second operation; and obtaining terminal policy information;
a fifth receiving module, configured to receive terminal policy information sent by the third communication device; and
a third sending module, configured to send the terminal policy information to the sixth communication device; where
the sixth communication device provides session management services for both the first network and the second network;
   or
a sixth receiving module, configured to receive a first request sent by a seventh communication device, where the first request is used for at least one of the following: triggering the second operation; and obtaining terminal policy information;
a seventh receiving module, configured to receive terminal policy information sent by the third communication device; and
a fourth sending module, configured to send the terminal policy information to the seventh communication device; where
the seventh communication device is located in the second network, and the seventh communication device is used to provide session policy services for a terminal in the second network.

Optionally, the apparatus 360 for processing a terminal policy association further includes:
an obtaining module, configured to obtain a trigger condition for triggering the second operation, where the trigger condition includes at least one of the following:
receiving a context request sent by a second communication device, where the context request includes at least one of the following: a capability indication that the terminal supports receiving terminal policy information under the second network; and indication information that the terminal requests to obtain terminal policy information;
receiving a terminal policy acquisition request sent by the second communication device, where the terminal policy acquisition request is used for obtaining terminal policy information for the terminal;
receiving a tracking area update or attach request of the terminal; and
detecting that the terminal accesses the second network from the first network.

Refer to FIG. 37. An embodiment of this application further provides an apparatus 370 for processing a terminal policy association, including:
a notification module 371, configured to trigger a third operation after a terminal re-accesses a first network from a second network, where the third operation includes at least one of the following:
releasing a first terminal policy association; and
releasing or deactivating a second terminal policy association; where
the first terminal policy association is used for obtaining terminal policy information by the terminal in the first network;
the second terminal policy association is used for obtaining terminal policy information by the terminal in the second network; and
the first network and the second network use different radio access technologies.

According to this embodiment of this application, in the processing method in which a terminal policy association is provided for the terminal re-accessing the first network from the second network, the terminal can still obtain terminal policy information based on the terminal policy association provided by the network side after re-accessing the first network from the second network.

Optionally, the notification module 371 is configured to trigger the third operation according to an indication of the new first communication device; where the new first communication device is a communication device that maintains the terminal policy association for the terminal in the first network after the terminal re-accesses the first network from the second network.

Optionally, the notification module 371 is configured to: after the terminal re-accesses the first network from the second network, indicate the old first communication device to trigger a third operation, where the third operation includes at least one of the following:
releasing a first terminal policy association; and
releasing or deactivating a second terminal policy association;
   and/or
after the terminal re-accesses the first network from the second network, indicate a seventh communication device to trigger a third operation, where the third operation includes at least one of the following:
   releasing or deactivating a second terminal policy association; where
   the old first communication device is a communication device that maintains a terminal policy association for the terminal in the first network before the terminal accesses the second network; and
   the seventh communication device is located in the second network, and the seventh communication device is used to provide session policy services for a terminal in the second network. Optionally, the apparatus 370 for processing a terminal policy association further includes:
      a sending module, configured to send first information to the new first communication device, where the first information includes at least one of the following:
      index information of an old first communication device;
      index information of an old third communication device;
      an identifier ID of the first terminal policy association; and
      a terminal identifier; where
      the first information is used for at least one of the following:
         finding the old third communication device; and
         modifying or releasing a terminal policy association maintained by the old third communication device; where
         the new first communication device is a communication device that maintains a terminal policy association for the terminal in the first network after the terminal re-accesses the first network from the second network; and
         the old third communication device is a communication device that maintains a terminal policy association for the terminal in the first network before the terminal accesses the second network.

Optionally, the index information of the old first communication device includes at least one of the following: a first communication device ID and a first communication device address; and/or, the index information of the old third communication device includes at least one of the following: a third communication device ID and a third communication device address.

Optionally, the apparatus 370 for processing a terminal policy association further includes:
a receiving module, configured to receive a context request sent by the new first communication device, where the context request is used for requesting to obtain the first information; and
the sending module is configured to send a context response to the new first communication device, where the context response carries the first information.

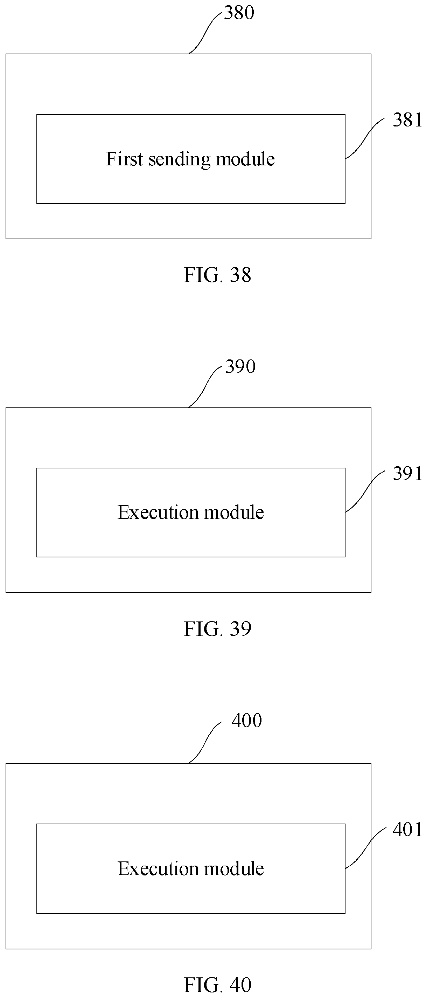

Refer to FIG. 38. An embodiment of this application further provides an apparatus 380 for processing a terminal policy association, including:
a first sending module 381, configured to send an update location request to a fourth communication device after a terminal accesses a second network from a first network, where the update location request carries first indication information, and the first indication information is used to indicate one of the following:
not sending a deregistration notification to an old first communication device; and
sending a deregistration notification to the old first communication device, where the deregistration notification is used for indicating at least one of the following: retaining or releasing or deactivating a first terminal policy association, and retaining terminal policy information; where
the first terminal policy association is used for obtaining terminal policy information by the terminal in the first network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

According to this embodiment of this application, in the processing method in which a terminal policy association is provided for the terminal accessing the second network from the first network, the terminal can still obtain terminal policy information based on the terminal policy association provided by the network side after accessing the second network from the first network.

Optionally, the apparatus 380 for processing a terminal policy association further includes:
a second sending module, configured to send a terminal policy acquisition request to the old first communication device, where the terminal policy acquisition request is used for obtaining terminal policy information for the terminal;
a first receiving module, configured to receive terminal policy information sent by an old second communication device; and
a third sending module, configured to send the terminal policy information to the terminal;
   or
a fourth sending module, configured to send a session establishment request to a sixth communication device, where the session establishment request includes the indication information for obtaining the terminal policy information;
a second receiving module, configured to receive terminal policy information sent by the sixth communication device; and
a third sending module, configured to send the terminal policy information to the terminal; where
the sixth communication device provides session management services for both the first network and the second network.

Optionally, the apparatus 380 for processing a terminal policy association further includes:
a third receiving module, configured to receive a tracking area update request sent by the terminal, where the tracking area update request carries at least one of the following: a capability indication that the terminal supports receiving terminal policy information under the second network; and indication information that the terminal requests to obtain terminal policy information; and
the second sending module is configured to send a context request to the old first communication device based on the tracking area update request, where the context request carries the terminal policy acquisition request;
   or
the second sending module is configured to send a terminal policy acquisition request to the old first communication device after receiving a session creation response.

Optionally, the apparatus 380 for processing a terminal policy association further includes:
a fourth receiving module, configured to receive first information sent by the old first communication device, where the first information includes at least one of the following:
index information of an old first communication device;
index information of an old third communication device;
an identifier ID of the first terminal policy association; and
a terminal identifier; where
the first information is used for at least one of the following:
   establishing a second terminal policy association or modifying a first terminal policy association; and
   obtaining terminal policy information; where
   the old third communication device is a communication device that maintains a terminal policy association for the terminal in the first network before the terminal accesses the second network; and
   the second terminal policy association is used for obtaining terminal policy information by the terminal in the second network.

Optionally, the index information of the old first communication device includes at least one of the following: a first communication device ID and a first communication device address; and/or, the index information of the old third communication device includes at least one of the following: a third communication device ID and a third communication device address.

Refer to FIG. 39. An embodiment of this application further provides an apparatus 390 for processing a terminal policy association, including:
an execution module 391, configured to perform a first operation after a terminal re-accesses a first network from a second network, where the first operation includes one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; where
the first terminal policy association and the third terminal policy association are used for obtaining terminal policy information by the terminal in the first network;
the second terminal policy association is used for obtaining terminal policy information by the terminal in the second network; and
the first network and the second network use different radio access technologies.

According to this embodiment of this application, in the processing method in which a terminal policy association is provided for the terminal re-accessing the first network from the second network, the terminal can still obtain terminal policy information based on the terminal policy association provided by the network side after re-accessing the first network from the second network.

Optionally, the execution module 391 is configured to perform the first operation based on trigger information sent by a first communication device; where
the first communication device is a communication device that maintains a terminal policy association for the terminal in the first network.

Optionally, the trigger information includes at least one of the following:
a terminal policy association establishment request, where the terminal policy association establishment request is used for obtaining terminal policy information;
a terminal policy association modification request, where the terminal policy association modification request is used for obtaining terminal policy information; and
a terminal policy association termination request, where the terminal policy association termination request is used for terminating provision of terminal policy information by the third communication device.

Refer to FIG. 40. An embodiment of this application further provides an apparatus 400 for processing a terminal policy association, including:
an execution module 401, configured to perform a second operation after a terminal re-accesses a second network from a first network, where the second operation includes one of the following:
releasing or deactivating a first terminal policy association;
retaining terminal policy information;
establishing a second terminal policy association; and
modifying the first terminal policy association; where
the first terminal policy association is used for obtaining terminal policy information by the terminal in the first network;
the second terminal policy association is used for obtaining terminal policy information by the terminal in the second network; and
the first network and the second network use different radio access technologies.

According to this embodiment of this application, in the processing method in which a terminal policy association is provided for the terminal accessing the second network from the first network, the terminal can still obtain terminal policy information based on the terminal policy association provided by the network side after accessing the second network from the first network.

Optionally, the execution module 401 is configured to perform the second operation based on the trigger information sent by the first communication device; where
the first communication device is located in the first network, and is a communication device that maintains a terminal policy association for the terminal in the first network before the terminal accesses the second network.

Optionally, the trigger information includes at least one of the following:
a terminal policy association establishment request, where the terminal policy association establishment request is used for obtaining terminal policy information;
a terminal policy association modification request, where the terminal policy association modification request is used for obtaining terminal policy information; and
a terminal policy association termination request, where the terminal policy association termination request is used for terminating provision of terminal policy information by the third communication device.

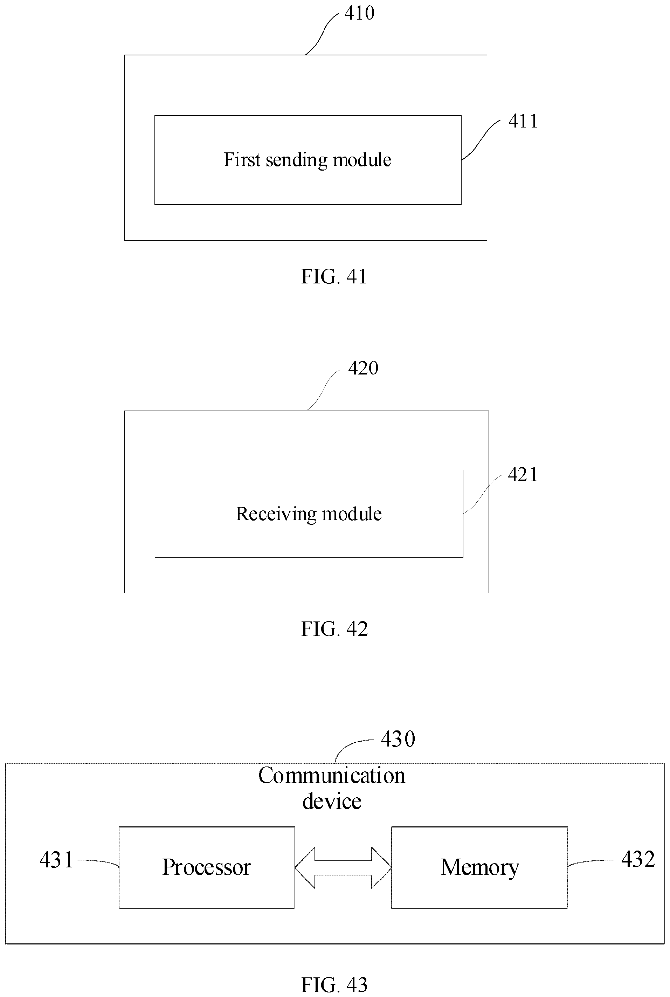

Refer to FIG. 41. An embodiment of this application further provides an apparatus 410 for processing a terminal policy association, including:
a first sending module 411, configured to send trigger information after a terminal re-accesses a first network from a second network, where the trigger information is used to trigger an old first communication device to trigger at least one of the following: releasing a first terminal policy association; and releasing or deactivating a second terminal policy association; where
the first terminal policy association is used for obtaining terminal policy information by the terminal in the first network;
the second terminal policy association is used for obtaining terminal policy information by the terminal in the second network;
the old first communication device is a communication device that maintains a terminal policy association for the terminal in the first network before the terminal accesses the second network; and
the first network and the second network use different radio access technologies.

According to this embodiment of this application, in the processing method in which a terminal policy association is provided for the terminal re-accessing the first network from the second network, the terminal can still obtain terminal policy information based on the terminal policy association provided by the network side after re-accessing the first network from the second network.

Optionally, the sending module 411 is configured to send the trigger information to a second communication device, a new first communication device, or an old first communication device; where
the second communication device is located in the second network; and
the new first communication device is a communication device that maintains a terminal policy association for the terminal in the first network after the terminal re-accesses the first network from the second network.

Optionally, the apparatus 410 for processing a terminal policy association further includes:
a second sending module, configured to send the first information to a new first communication device, where the first information includes at least one of the following:
index information of an old first communication device;
index information of an old third communication device;
an identifier ID of the first terminal policy association; and
a terminal identifier; where
the first information is used for at least one of the following:
finding the old third communication device; and
modifying or releasing a terminal policy association maintained by the old third communication device; where
the old first communication device and the old third communication device are communication devices that maintain a terminal policy association for the terminal in the first network before the terminal accesses the second network.

Optionally, the index information of the old first communication device includes at least one of the following: a first communication device ID and a first communication device address; and/or, the index information of the old third communication device includes at least one of the following: a third communication device ID and a third communication device address.

Refer to FIG. 42. An embodiment of this application further provides an apparatus 420 for processing a terminal policy association, including:
a receiving module 421, configured to receive an update location request sent by a second communication device, after a terminal accesses a second network from a first network, where the update location request carries first indication information, and the first indication information is used to indicate one of the following:
not sending a deregistration notification to an old first communication device; and
sending a deregistration notification to the old first communication device, where the deregistration notification is used for indicating the old first communication device to trigger at least one of the following: retaining or releasing or deactivating a first terminal policy association, and retaining terminal policy information; where
the first terminal policy association is used for obtaining terminal policy information by the terminal in the first network;
the second communication device is located in the second network;
the old first communication device is a communication device that maintains a terminal policy association for the terminal in the first network before the terminal accesses the second network; and
the first network and the second network use different radio access technologies.

According to this embodiment of this application, in the processing method in which a terminal policy association is provided for the terminal accessing the second network from the first network, the terminal can still obtain terminal policy information based on the terminal policy association provided by the network side after accessing the second network from the first network.

Optionally, as shown in FIG. 43, an embodiment of this application further provides a communication device 430, including a processor 431 and a memory 432, and the memory 432 stores a program or instructions capable of running on the processor 431. When the program or instructions are executed by the processor 431, the steps of the foregoing embodiments of the method for processing a terminal policy association may be implemented, with the same technical effects achieved. To avoid repetition, details are not described herein again.

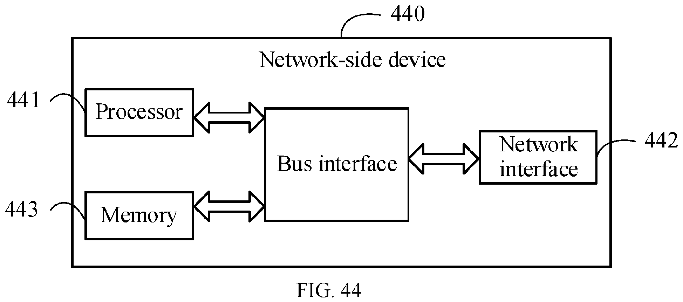

Specifically, an embodiment of this application further provides a communication device. As shown in FIG. 44, the communication device 440 includes a processor 441, a network interface 442, and a memory 443. The network interface 442 is, for example, a common public radio interface (common public radio interface, CPRI).

Specifically, the communication device 440 according to this embodiment of the present invention further includes instructions or programs stored in the memory 443 and capable of running on the processor 441, and the processor 441 calls the instructions or programs in the memory 443 to execute the methods performed by the modules shown in FIG. 35, FIG. 36, FIG. 37, FIG. 38, FIG. 39, FIG. 40, FIG. 41, or FIG. 42, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the method for processing a terminal policy association may be implemented, with the same technical effects achieved. To avoid repetition, details are not described herein again.

The processor is a processor in the terminal described in the above embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiments of the method for processing a terminal policy association, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the method for processing a terminal policy association, with the same technical effects achieved. To avoid repetition, details are not repeated herein.

An embodiment of this application further provides a communication system, including: a first communication device, a second communication device, a third communication device, and a fourth communication device, where the first communication device may be configured to perform the steps of the method for processing a terminal policy association as performed by the first communication device; the second communication device may be configured to perform the steps of the method for processing a terminal policy association as performed by the second communication device; the third communication device may be configured to perform the steps of the method for processing a terminal policy association as performed by the third communication device, and the fourth communication device may be configured to perform the steps of the method for processing a terminal policy association as performed by the fourth communication device.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Specifically, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for indicating a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A method for processing a terminal policy association, wherein the method comprises:
receiving, by a third communication device, fourth indication information sent by a seventh communication device, wherein the fourth indication information is used to indicate the third communication device to release or terminate a policy association of a terminal under a second network; and
releasing or terminating, by the third communication device, the policy association of the terminal under the second network.

2. The method according to claim 1, wherein
the fourth indication information comprises Npcf_UEPolicyControl_Delete signaling.

3. The method according to claim 1 or 2, wherein
the third communication device comprises an AM-PCF, or
the seventh communication device comprises an SM-PCF.

4. A method for processing a terminal policy association, wherein the method comprises:
sending, by a seventh communication device, fourth indication information to a third communication device, wherein the fourth indication information is used to indicate the third communication device to release or terminate a policy association of a terminal under a second network.

5. The method according to claim 4, wherein
receiving, by the seventh communication device, indication information that is used for indicating the terminal to access a first network from the second network and that is sent by a sixth communication device.

6. The method according to claim 4 or 5, wherein
the fourth indication information comprises Npcf_UEPolicyControl_Delete signaling.

7. The method according to any one of claims 4 to 6, wherein
the third communication device comprises an AM-PCF, or
the seventh communication device comprises an SM-PCF; or
the sixth communication device comprises an SMF or a communication device integrating an SMF and a PGW-C.

8. A method for processing a terminal policy association, comprising:
triggering, by a first communication device, a first operation after a terminal re-accesses a first network from a second network, wherein the first operation comprises one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; wherein
the first terminal policy association and the third terminal policy association are used for obtaining terminal policy information by the terminal in the first network;
the second terminal policy association is used for obtaining terminal policy information by the terminal in the second network;
the first communication device is located in the first network; and
the first network and the second network use different radio access technologies.

9. The method according to claim 8, wherein the triggering a first operation comprises:
obtaining, by the first communication device, first information; and
triggering, by the first communication device, the first operation based on the first information; wherein
the first information comprises at least one of the following:
index information of an old first communication device;
index information of an old third communication device;
an identifier ID of the first terminal policy association; and
a terminal identifier; wherein
the old first communication device and the old third communication device are communication devices that maintain a terminal policy association for the terminal in the first network before the terminal accesses the second network.

10. The method according to claim 9, wherein
the index information of the old first communication device comprises at least one of the following: a first communication device ID and a first communication device address;
and/or
the index information of the old third communication device comprises at least one of the following: a third communication device ID and a third communication device address.

11. The method according to claim 9, wherein the obtaining first information comprises:
receiving the first information sent by a second communication device or a fourth communication device or the old first communication device; wherein
the second communication device is located in the second network;
the fourth communication device provides unified data management services for both the first network and the second network; and
the old first communication device maintains a terminal context, and the terminal context comprises the first information.

12. The method according to claim 9, wherein the triggering a first operation comprises at least one of the following:
in a case of determining based on the first information that the first communication device remains unchanged and a third communication device remains unchanged after the terminal re-accesses the first network from the second network, triggering, by the first communication device, the first operation, wherein the first operation comprises one of the following: modifying the second terminal policy association; activating the first terminal policy association, and releasing or deactivating the second terminal policy association; creating a third terminal policy association, releasing the first terminal policy association, and releasing or deactivating the second terminal policy association; and creating a third terminal policy association, and releasing or deactivating the second terminal policy association;
in a case of determining based on the first information that the first communication device remains unchanged and the third communication device is changed after the terminal re-accesses the first network from the second network, triggering, by the first communication device, the first operation, wherein the first operation comprises one of the following: creating a third terminal policy association, releasing the first terminal policy association, and releasing or deactivating the second terminal policy association; and creating a third terminal policy association, and releasing or deactivating the second terminal policy association;
in a case of determining based on the first information that the first communication device is changed and the third communication device remains unchanged after the terminal re-accesses the first network from the second network, triggering, by the first communication device, the first operation, wherein the first operation comprises one of the following: activating and modifying the first terminal policy association, and releasing or deactivating the second terminal policy association; modifying the second terminal policy association; creating a third terminal policy association, releasing the first terminal policy association, and releasing or deactivating the second terminal policy association; and creating a third terminal policy association, and releasing or deactivating the second terminal policy association; and
in a case of determining based on the first information that the first communication device is changed and the third communication device is changed after the terminal re-accesses the first network from the second network, triggering, by the first communication device, the first operation, wherein the first operation comprises one of the following: creating a third terminal policy association, releasing the first terminal policy association, and releasing or deactivating the second terminal policy association; and creating a third terminal policy association, and releasing or deactivating the second terminal policy association.

13. The method according to claim 12, wherein
the in a case of determining based on the first information that the first communication device remains unchanged and the third communication device remains unchanged after the terminal re-accesses the first network from the second network, triggering, by the first communication device, the first operation comprises: triggering the third communication device to perform one of the following:
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association;
and/or
the in a case of determining based on the first information that the first communication device remains unchanged and the third communication device is changed after the terminal re-accesses the first network from the second network, triggering, by the first communication device, the first operation comprises one of the following:
triggering the old third communication device to release the first terminal policy association and release or deactivate the second terminal policy association; and triggering a newly selected third communication device to create a new third terminal policy association; and
triggering the old third communication device to release or deactivate the second terminal policy association; and triggering a newly selected third communication device to create a new third terminal policy association;
and/or
the in a case of determining based on the first information that the first communication device is changed and the third communication device remains unchanged after the terminal re-accesses the first network from the second network, triggering, by the first communication device, the first operation comprises one of the following:
triggering the third communication device to activate and modify the first terminal policy association, and release or deactivate the second terminal policy association;
triggering the third communication device to modify the second terminal policy association;
triggering the third communication device to release the first terminal policy association, create a third terminal policy association, and release or deactivate the second terminal policy association;
indicating the old first communication device to trigger the third communication device to release the first terminal policy association; and triggering the third communication device to create a new third terminal policy association, and release or deactivate the second terminal policy association;
indicating the second communication device to inform the old first communication device to trigger the third communication device to release the first terminal policy association; and triggering the third communication device to create a new third terminal policy association, and release or deactivate the second terminal policy association;
triggering the third communication device to create a new third terminal policy association, and release or deactivate the second terminal policy association; sending a registration request to a fourth communication device, wherein the registration request is used for indicating the fourth communication device to send a deregistration notification to the old first communication device, and the deregistration notification is used for indicating the old first communication device to trigger the third communication device to release the first terminal policy association;
triggering the third communication device to create a new third terminal policy association and release or deactivate the second terminal policy association, after a registration response sent by the fourth communication device is received, wherein the registration response is sent after the fourth communication device learns that the old first communication device releases the first terminal policy association;
triggering the third communication device to create a new third terminal policy association, and release or deactivate the second terminal policy association;
indicating a seventh communication device to release or deactivate the second terminal policy association, and triggering the third communication device to activate and modify the first terminal policy association;
indicating the seventh communication device to release or deactivate the second terminal policy association, and triggering the third communication device to release the first terminal policy association and create a new third terminal policy association; and
indicating the seventh communication device to release or deactivate the second terminal policy association, and triggering the third communication device to create a new third terminal policy association; and/or
the in a case of determining based on the first information that the first communication device is changed and the third communication device is changed after the terminal re-accesses the first network from the second network, triggering, by the first communication device, the first operation comprises one of the following:
triggering the old third communication device to release the first terminal policy association and release or deactivate the second terminal policy association; and triggering a newly selected third communication device to create a new third terminal policy association;
indicating the old first communication device to trigger the old third communication device to release the first terminal policy association and release or deactivate the second terminal policy association; and triggering the newly selected third communication device to create a new third terminal policy association;
indicating the second communication device to inform the old first communication device to trigger the old third communication device to release the first terminal policy association and release or deactivate the second terminal policy association; and triggering the newly selected third communication device to create a new third terminal policy association;
triggering the newly selected third communication device to create a new third terminal policy association, and sending a registration request to a fourth communication device, wherein the registration request is used for indicating the fourth communication device to send a deregistration notification to the old first communication device, and the deregistration notification is used for indicating the old first communication device to trigger the old third communication device to release the first terminal policy association and release or deactivate the second terminal policy association;
triggering the newly selected third communication device to create a new third terminal policy association after receiving a registration response sent by the fourth communication device, wherein the registration response is sent after the fourth communication device learns that the old first communication device releases the first terminal policy association and releases or deactivates the second terminal policy association;
triggering the old third communication device to release or deactivate the second terminal policy association; and triggering a newly selected third communication device to create a new third terminal policy association;
indicating the old first communication device to trigger the old third communication device to release or deactivate the second terminal policy association; and triggering the newly selected third communication device to create a new third terminal policy association;
indicating the second communication device to inform the old first communication device to trigger the old third communication device to release or deactivate the second terminal policy association; and triggering the newly selected third communication device to create a new third terminal policy association;
triggering the newly selected third communication device to create a new third terminal policy association, and sending a registration request to the fourth communication device, wherein the registration request is used for indicating the fourth communication device to send a deregistration notification to the old first communication device, and the deregistration notification is used for indicating the old first communication device to trigger the old third communication device to release or deactivate the second terminal policy association;
triggering the newly selected third communication device to create a new third terminal policy association, after receiving a registration response sent by the fourth communication device, wherein the registration response is sent after the fourth communication device learns that the old first communication device releases or deactivates the second terminal policy association;
indicating the seventh communication device to release or deactivate the second terminal policy association, triggering the old third communication device to release the first terminal policy association, and triggering the newly selected third communication device to create a new third terminal policy association;
indicating the seventh communication device to release or deactivate the second terminal policy association, indicating the old first communication device to trigger the old third communication device to release the first terminal policy association, and triggering the newly selected third communication device to create a new third terminal policy association; and
indicating the seventh communication device to release or deactivate the second terminal policy association, and triggering the newly selected third communication device to create a new third terminal policy association; wherein the indicating the seventh communication device to release or deactivate the second terminal policy association comprises one of the following: the first communication device directly indicates the seventh communication device to release or deactivate the second terminal policy association; and the first communication device indicates the seventh communication device through the second communication device to release or deactivate the second terminal policy association; wherein
the seventh communication device is located in the second network, and the seventh communication device is used to provide session policy services for a terminal in the second network.

14. A method for processing a terminal policy association, comprising:
triggering, by a first communication device, a second operation after a terminal accesses a second network from a first network, wherein the second operation comprises one of the following:
releasing or deactivating a first terminal policy association;
retaining terminal policy information;
establishing a second terminal policy association; and
modifying the first terminal policy association; wherein
the first terminal policy association is used for obtaining terminal policy information by the terminal in the first network;
the second terminal policy association is used for obtaining terminal policy information by the terminal in the second network;
the first communication device is located in the first network; and
the first network and the second network use different radio access technologies.

15. The method according to claim 14, further comprising:
receiving, by the first communication device, a terminal policy acquisition request sent by a second communication device, wherein the terminal policy acquisition request is used for obtaining terminal policy information for the terminal;
sending the terminal policy control acquisition request to a third communication device; and
receiving terminal policy information sent by the third communication device and sending it to the second communication device; wherein
the third communication device is located in the first network; and
the second communication device is located in the second network.

16. The method according to claim 14, further comprising:
sending, by the first communication device, first information to a second communication device or a fourth communication device, wherein the first information comprises at least one of the following:
index information of the first communication device;
index information of a third communication device;
an identifier ID of the first terminal policy association; and
a terminal identifier; wherein
the first information is used for at least one of the following:
establishing a second terminal policy association or modifying a first terminal policy association; and
obtaining terminal policy information; wherein
the fourth communication device provides unified data management services for both the first network and the second network.

17. The method according to claim 16, wherein
the index information of the first communication device comprises at least one of the following: a first communication device ID and a first communication device address;
and/or
the index information of the third communication device comprises at least one of the following: a third communication device ID and a third communication device address.

18. The method according to claim 14, before the triggering a second operation, further comprising:
receiving a deregistration notification sent by a fourth communication device, wherein the deregistration notification is used for indicating the first communication device to trigger the second operation; wherein
the fourth communication device provides unified data management services for both the first network and the second network.

19. The method according to claim 14, wherein
before the triggering a second operation, the method further comprises:
receiving a first request sent by a sixth communication device, wherein the first request is used for at least one of the following: triggering the second operation; and obtaining terminal policy information; and
the method further comprises: receiving terminal policy information sent by a third communication terminal and sending it to the sixth communication device; wherein
the sixth communication device provides session management services for both the first network and the second network;
or
receiving a first request sent by a seventh communication device, wherein the first request is used for at least one of the following: triggering the second operation; and obtaining terminal policy information; and
the method further comprises: receiving terminal policy information sent by the third communication terminal and sending it to the seventh communication device; wherein
the seventh communication device is located in the second network, and the seventh communication device is used to provide session policy services for a terminal in the second network.

20. The method according to claim 14, before the triggering a second operation, further comprising:
obtaining a trigger condition for triggering the second operation, wherein the trigger condition comprises at least one of the following:
receiving a context request sent by a second communication device, wherein the context request comprises at least one of the following: a capability indication that the terminal supports receiving terminal policy information under the second network; and indication information that the terminal requests to obtain terminal policy information;
receiving a terminal policy acquisition request sent by the second communication device, wherein the terminal policy acquisition request is used for obtaining terminal policy information for the terminal;
receiving a tracking area update or attach request of the terminal; and
detecting that the terminal accesses the second network from the first network.

21. A method for processing a terminal policy association, comprising:
triggering, by a second communication device, a third operation after a terminal re-accesses a first network from a second network, wherein the third operation comprises one of the following:
releasing a first terminal policy association; and
releasing or deactivating a second terminal policy association; wherein
the first terminal policy association is used for obtaining terminal policy information by the terminal in the first network;
the second terminal policy association is used for obtaining terminal policy information by the terminal in the second network;
the second communication device is located in the second network; and
the first network and the second network use different radio access technologies.

22. The method according to claim 21, wherein the triggering a third operation comprises:
triggering, by the second communication device, the third operation according to an indication of a new first communication device; wherein
the new first communication device is a communication device that maintains a terminal policy association for the terminal in the first network after the terminal re-accesses the first network from the second network.

23. The method according to claim 21, wherein the triggering, by a second communication device, a third operation after a terminal re-accesses a first network from a second network comprises:
indicating, by the second communication device, the old first communication device to trigger a third operation, after the terminal re-accesses the first network from the second network, wherein the third operation comprises at least one of the following:
releasing a first terminal policy association; and
releasing or deactivating the second terminal policy association; and/or
indicating, by the second communication device, a seventh communication device to trigger a third operation, after the terminal re-accesses the first network from the second network, wherein the third operation comprises at least one of the following:
releasing or deactivating a second terminal policy association; wherein
the old first communication device is a communication device that maintains a terminal policy association for the terminal in the first network before the terminal accesses the second network; and
the seventh communication device is located in the second network, and the seventh communication device is used to provide session policy services for a terminal in the second network.

24. The method according to claim 21, further comprising:
sending, the second communication device, first information to a new first communication device, wherein the first information comprises at least one of the following:
index information of an old first communication device;
index information of an old third communication device;
an identifier ID of the first terminal policy association; and
a terminal identifier; wherein
the first information is used for at least one of the following:
finding the old third communication device; and
modifying or releasing a terminal policy association maintained by the old third communication device; wherein
the new first communication device is a communication device that maintains a terminal policy association for the terminal in the first network after the terminal re-accesses the first network from the second network; and
the old third communication device is a communication device that maintains a terminal policy association for the terminal in the first network before the terminal accesses the second network.

25. The method according to claim 24, wherein
the index information of the old first communication device comprises at least one of the following: a first communication device ID and a first communication device address;
and/or
the index information of the old third communication device comprises at least one of the following: a third communication device ID and a third communication device address.

26. The method according to claim 24, wherein the sending first information to a new first communication device comprises:
receiving, by the second communication device, a context request sent by the new first communication device, wherein the context request is used for requesting to obtain the first information; and
sending, by the second communication device, a context response to the new first communication device, wherein the context response carries the first information.

27. A method for processing a terminal policy association, comprising:
sending, by a second communication device, an update location request to a fourth communication device after a terminal accesses a second network from a first network, wherein the update location request carries first indication information, and the first indication information is used to indicate one of the following:
not sending a deregistration notification to an old first communication device; and
sending a deregistration notification to the old first communication device, wherein the deregistration notification is used for indicating at least one of the following: retaining or releasing or deactivating a first terminal policy association, and retaining terminal policy information; wherein
the first terminal policy association is used for obtaining terminal policy information by the terminal in the first network;
the second communication device is located in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

28. The method according to claim 27, further comprising:
sending, by the second communication device, a terminal policy acquisition request to the old first communication device, wherein the terminal policy acquisition request is used for obtaining terminal policy information for the terminal; and
receiving terminal policy information sent by an old second communication device and sending it to the terminal;
or
sending, by the second communication device, a session establishment request to a sixth communication device, wherein the session establishment request comprises indication information for obtaining the terminal policy information; and
receiving, by the second communication device, terminal policy information sent by the sixth communication device and sends it to the terminal; wherein
the sixth communication device provides session management services for both the first network and the second network.

29. The method according to claim 28, wherein the sending, by the second communication device, a terminal policy acquisition request to the old first communication device comprises:
receiving, by the second communication device, a tracking area update request sent by the terminal, wherein the tracking area update request carries at least one of the following: a capability indication that the terminal supports receiving terminal policy information under the second network; and indication information that the terminal requests to obtain terminal policy information; and
sending, by the second communication device, a context request to the old first communication device based on the tracking area update request, wherein the context request carries the terminal policy acquisition request;
or
sending, by the second communication device, a terminal policy acquisition request to the old first communication device after receiving a session creation response.

30. The method according to claim 27, further comprising:
receiving, by the second communication device, first information sent by the old first communication device, wherein the first information comprises at least one of the following:
index information of an old first communication device;
index information of an old third communication device;
an identifier ID of the first terminal policy association; and
a terminal identifier; wherein
the first information is used for at least one of the following:
establishing a second terminal policy association or modifying a first terminal policy association; and
obtaining terminal policy information; wherein
the old third communication device is a communication device that maintains a terminal policy association for the terminal in the first network before the terminal accesses the second network; and
the second terminal policy association is used for obtaining terminal policy information by the terminal in the second network.

31. The method according to claim 30, wherein
the index information of the old first communication device comprises at least one of the following: a first communication device ID and a first communication device address;
and/or
the index information of the old third communication device comprises at least one of the following: a third communication device ID and a third communication device address.

32. A method for processing a terminal policy association, comprising:
performing, by a third communication device, a first operation after a terminal re-accesses a first network from a second network, wherein the first operation comprises one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; wherein
the first terminal policy association and the third terminal policy association are used for obtaining terminal policy information by the terminal in the first network;
the second terminal policy association is used for obtaining terminal policy information by the terminal in the second network;
the third communication device is located in the first network; and
the first network and the second network use different radio access technologies.

33. The method according to claim 32, wherein the performing a first operation comprises:
performing, by the third communication device, the first operation based on trigger information sent by a first communication device; wherein
the first communication device is a communication device that maintains a terminal policy association for the terminal in the first network.

34. The method according to claim 33, wherein the trigger information comprises at least one of the following:
a terminal policy association establishment request, wherein the terminal policy association establishment request is used for obtaining terminal policy information;
a terminal policy association modification request, wherein the terminal policy association modification request is used for obtaining terminal policy information; and
a terminal policy association termination request, wherein the terminal policy association termination request is used for terminating provision of terminal policy information by the third communication device.

35. A method for processing a terminal policy association, comprising:
performing, by a third communication device, a second operation after a terminal accesses a second network from a first network, wherein the second operation comprises one of the following:
releasing or deactivating a first terminal policy association;
retaining terminal policy information;
establishing a second terminal policy association; and
modifying the first terminal policy association; wherein
the first terminal policy association is used for obtaining terminal policy information by the terminal in the first network;
the second terminal policy association is used for obtaining terminal policy information by the terminal in the second network;
the third communication device is located in the first network; and
the first network and the second network use different radio access technologies.

36. The method according to claim 35, wherein the performing a second operation comprises:
performing, by the third communication device, the second operation based on the trigger information sent by a first communication device; wherein
the first communication device is located in the first network, and is a communication device that maintains a terminal policy association for the terminal in the first network before the terminal accesses the second network.

37. The method according to claim 36, wherein the trigger information comprises at least one of the following:
a terminal policy association establishment request, wherein the terminal policy association establishment request is used for obtaining terminal policy information;
a terminal policy association modification request, wherein the terminal policy association modification request is used for obtaining terminal policy information; and
a terminal policy association termination request, wherein the terminal policy association termination request is used for terminating provision of terminal policy information by the third communication device.

38. A method for processing a terminal policy association, comprising:
sending, by a fourth communication device, trigger information after a terminal re-accesses a first network from a second network, wherein the trigger information is used to trigger an old first communication device to trigger at least one of the following: releasing a first terminal policy association; and releasing or deactivating a second terminal policy association; wherein
the first terminal policy association is used for obtaining terminal policy information by the terminal in the first network;
the second terminal policy association is used for obtaining terminal policy information by the terminal in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

39. The method according to claim 38, wherein the sending trigger information comprises:
sending, by the fourth communication device, the trigger information to a second communication device, a new first communication device, or an old first communication device; wherein
the second communication device is located in the second network; and
the new first communication device is a communication device that maintains a terminal policy association for the terminal in the first network after the terminal re-accesses the first network from the second network.

40. The method according to claim 38, further comprising:
sending, by the fourth communication device, first information to the new first communication device, wherein the first information comprises at least one of the following:
index information of an old first communication device;
index information of an old third communication device;
an identifier ID of the first terminal policy association; and
the first information is used for at least one of the following:
a terminal identifier; wherein
finding the old third communication device; and
modifying or releasing a terminal policy association maintained by the old third communication device; wherein
the old first communication device and the old third communication device are communication devices that maintain a terminal policy association for the terminal in the first network before the terminal accesses the second network.

41. The method according to claim 38, wherein
the index information of the old first communication device comprises at least one of the following: a first communication device ID and a first communication device address;
and/or
the index information of the old third communication device comprises at least one of the following: a third communication device ID and a third communication device address.

42. A method for processing a terminal policy association, comprising:
receiving, by a fourth communication device, an update location request sent by a second communication device after a terminal accesses a second network from a first network, wherein the update location request carries first indication information, and the first indication information is used to indicate one of the following:
not sending a deregistration notification to an old first communication device; and
sending a deregistration notification to the old first communication device, wherein the deregistration notification is used for indicating the old first communication device to trigger at least one of the following: retaining or releasing or deactivating a first terminal policy association, and retaining terminal policy information; wherein
the first terminal policy association is used for obtaining terminal policy information by the terminal in the first network;
the second communication device is located in the second network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

43. An apparatus for processing a terminal policy association, comprising:
a receiving module, configured to receive fourth indication information sent by a seventh communication device, wherein the fourth indication information is used to indicate the third communication device to release or terminate a policy association of a terminal under a second network; and
a releasing module, configured to release or terminate the policy association of the terminal under the second network.

44. An apparatus for processing a terminal policy association, comprising:
a sending module, configured to send fourth indication information to a third communication device, wherein the fourth indication information is used to indicate the third communication device to release or terminate a policy association of a terminal under a second network.

45. An apparatus for processing a terminal policy association, comprising:
a triggering module, configured to trigger a first operation after a terminal re-accesses a first network from a second network, wherein the first operation comprises one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; wherein
the first terminal policy association and the third terminal policy association are used for obtaining terminal policy information by the terminal in the first network;
the second terminal policy association is used for obtaining terminal policy information by the terminal in the second network;
the first network and the second network use different radio access technologies.

46. An apparatus for processing a terminal policy association, comprising:
a triggering module, configured to trigger a second operation after a terminal accesses a second network from a first network, wherein the second operation comprises one of the following:
releasing or deactivating a first terminal policy association;
retaining terminal policy information;
establishing a second terminal policy association; and
modifying the first terminal policy association; wherein
the first terminal policy association is used for obtaining terminal policy information by the terminal in the first network;
the second terminal policy association is used for obtaining terminal policy information by the terminal in the second network;
the first network and the second network use different radio access technologies.

47. An apparatus for processing a terminal policy association, comprising:
a notification module, configured to trigger a third operation after a terminal re-accesses a first network from a second network, wherein the third operation comprises at least one of the following:
releasing a first terminal policy association; and
releasing or deactivating a second terminal policy association; wherein
the first terminal policy association is used for obtaining terminal policy information by the terminal in the first network;
the second terminal policy association is used for obtaining terminal policy information by the terminal in the second network;
the first network and the second network use different radio access technologies.

48. An apparatus for processing a terminal policy association, comprising:
a first sending module, configured to send an update location request to a fourth communication device after a terminal accesses a second network from a first network, wherein the update location request carries first indication information, and the first indication information is used to indicate one of the following:
not sending a deregistration notification to an old first communication device; and
sending a deregistration notification to the old first communication device, wherein the deregistration notification is used for indicating at least one of the following: retaining or releasing or deactivating a first terminal policy association, and retaining terminal policy information; wherein
the first terminal policy association is used for obtaining terminal policy information by the terminal in the first network;
the old first communication device is a communication device that maintains a terminal policy association for the terminal in the first network before the terminal accesses the second network;
the fourth communication device provides unified data management services for both the first network and the second network; and
the first network and the second network use different radio access technologies.

49. An apparatus for processing a terminal policy association, comprising:
an execution module, configured to perform a first operation after a terminal re-accesses a first network from a second network, wherein the first operation comprises one of the following:
activating and modifying a first terminal policy association, and releasing or deactivating a second terminal policy association;
modifying the second terminal policy association;
activating the first terminal policy association, and releasing or deactivating the second terminal policy association;
creating a third terminal policy association, releasing the first terminal policy association, and releasing or deactivating the second terminal policy association; and
creating a third terminal policy association, and releasing or deactivating the second terminal policy association; wherein
the first terminal policy association and the third terminal policy association are used for obtaining terminal policy information by the terminal in the first network;
the second terminal policy association is used for obtaining terminal policy information by the terminal in the second network;
the first network and the second network use different radio access technologies.

50. An apparatus for processing a terminal policy association, comprising:
an execution module, configured to perform a second operation after a terminal accesses a second network from a first network, wherein the second operation comprises one of the following:
releasing or deactivating a first terminal policy association;
retaining terminal policy information;
establishing a second terminal policy association; and
modifying the first terminal policy association; wherein
the first terminal policy association is used for obtaining terminal policy information by the terminal in the first network;
the second terminal policy association is used for obtaining terminal policy information by the terminal in the second network;
the first network and the second network use different radio access technologies.

51. An apparatus for processing a terminal policy association, comprising:
a first sending module, configured to send trigger information after a terminal re-accesses a first network from a second network, wherein the trigger information is used to trigger an old first communication device to trigger at least one of the following: releasing a first terminal policy association; and releasing or deactivating a second terminal policy association; wherein
the first terminal policy association is used for obtaining terminal policy information by the terminal in the first network;
the second terminal policy association is used for obtaining terminal policy information by the terminal in the second network;
the old first communication device is a communication device that maintains a terminal policy association for the terminal in the first network before the terminal accesses the second network; and
the first network and the second network use different radio access technologies.

52. An apparatus for processing a terminal policy association, comprising:
a receiving module, configured to receive an update location request sent by a second communication device, after a terminal accesses a second network from a first network, wherein the update location request carries first indication information, and the first indication information is used to indicate one of the following:
not sending a deregistration notification to an old first communication device; and
sending a deregistration notification to the old first communication device, wherein the deregistration notification is used for indicating the old first communication device to trigger at least one of the following: retaining or releasing or deactivating a first terminal policy association, and retaining terminal policy information; wherein
the first terminal policy association is used for obtaining terminal policy information by the terminal in the first network;
the second communication device is located in the second network;
the old first communication device is a communication device that maintains a terminal policy association for the terminal in the first network before the terminal accesses the second network; and
the first network and the second network use different radio access technologies.

53. A communication device, comprising a processor and a memory, wherein the memory stores a program or instructions capable of running on the processor, and when the program or instructions are executed by the processor, the steps of the method for processing a terminal policy association according to any one of claims 1 to 3 are implemented; or, when the program or instructions are executed by the processor, the steps of the method for processing a terminal policy association according to any one of claims 4 to 7 are implemented; or, when the program or instructions are executed by the processor, the steps of the method for processing a terminal policy association according to any one of claims 8 to 13 are implemented; or, when the program or instructions are executed by the processor, the steps of the method for processing a terminal policy association according to any one of claims 14 to 20 are implemented; or, when the program or instructions are executed by the processor, the steps of the method for processing a terminal policy association according to any one of claims 21 to 26 are implemented; or, when the program or instructions are executed by the processor, the steps of the method for processing a terminal policy association according to any one of claims 27 to 31 are implemented; or, when the program or instructions are executed by the processor, the steps of the method for processing a terminal policy association according to any one of claims 32 to 34 are implemented; or, when the program or instructions are executed by the processor, the steps of the method for processing a terminal policy association according to any one of claims 35 to 37 are implemented; or, when the program or instructions are executed by the processor, the steps of the method for processing a terminal policy association according to any one of claims 38 to 41; or, the program or instruction, when executed by the processor, implements the method for processing a terminal policy association according to claim 42.

54. A readable storage medium, wherein the readable storage medium stores a program or instructions, and when the program or instructions are executed by a processor, the steps of the method for processing a terminal policy association according to any one of claims 1 to 3 are implemented; or, when the program or instructions are executed by the processor, the steps of the method for processing a terminal policy association according to any one of claims 4 to 7 are implemented; or, when the program or instructions are executed by the processor, the steps of the method for processing a terminal policy association according to any one of claims 8 to 13 are implemented; or, when the program or instructions are executed by the processor, the steps of the method for processing a terminal policy association according to any one of claims 14 to 20 are implemented; or, when the program or instructions are executed by the processor, the steps of the method for processing a terminal policy association according to any one of claims 21 to 26 are implemented; or, when the program or instructions are executed by the processor, the steps of the method for processing a terminal policy association according to any one of claims 27 to 31 are implemented; or, when the program or instructions are executed by the processor, the steps of the method for processing a terminal policy association according to any one of claims 32 to 34 are implemented; or, when the program or instructions are executed by the processor, the steps of the method for processing a terminal policy association according to any one of claims 35 to 37 are implemented; or, when the program or instructions are executed by the processor, the steps of the method for processing a terminal policy association according to any one of claims 38 to 41; or, the program or instruction, when executed by the processor, implements the method for processing a terminal policy association according to claim 42.
